# EUROPEAN PATENT APPLICATION

(11) **EP 1 829 682 A2**
(43) Date of publication of application: **05.09.2007**
(21) Application number: 07004244.5
(22) Date of filing: 01.03.2007
(51) Int. Cl.: B41C 1/10

(54) **Method of producing planographic printing plate and planographic printing plate**

(30) Priority: 03.03.2006 JP 2006058673
(71) Applicant: FUJIFILM Corporation, Minato-ku Tokyo (JP)
(72) Inventor: Aoshima, Keitaro, Haibara-gun Shizuoka-ken (JP)
(74) Representative: HOFFMANN EITLE

(57) **Abstract**

The present invention provides a method of producing a planographic printing plate, including ejecting a photo-polymerizable ink composition containing at least one polymerization-initiating substance having a molar extinction coefficient of 1,000 M⁻¹cm⁻¹ or more in a wavelength range of 400 nm to 700 nm on a support, and polymerizing and hardening the ink deposited on the support by irradiation of the ink with light from a light source having an output of 1,000 W or less, and a planographic printing plate obtained by the method.

## Description

### TECHNICAL FIELD

The present invention relates to a method of producing a planographic printing plate by an ink jet recording process and to a planographic printing plate produced by the method. In particular, the invention relates to a method of producing a planographic printing plate by using an ink jet recording process so as to apply a photo-polymerizable ink composition onto a recording medium and to a planographic printing plate obtained by the method.

### RELATED ART

As recording processes for forming an image on a recording medium on the basis of image data signals, an electrophotographic process, a heat transfer process, and an ink jet process are known. The electrophotographic process requires a step of forming an electrostatic latent image on a photosensitive drum by electrostatic charging and light exposure of the photosensitive drum. Therefore, the electrophotographic process needs a complicated system and an expensive apparatus. In the heat transfer process, although an apparatus therefore is inexpensive, the process requires use of an ink ribbon, resulting in production of waste materials, or used ink ribbons, which may include unused portions, and therefore, a running cost is high. On the other hand, in the ink jet process, an image is directly formed on a recording medium by ejecting ink droplets only on image areas with an inexpensive apparatus. As a result, the process produces no waste material, and the running cost is low. Therefore, the ink jet process is an advantageous recording process.

Recording media used in the ink jet recording process are made of various materials such as paper, plastic, and metal, and the type of recording medium for ink jet recording is selected according to the application of the medium. Efforts to print an image on many sheets of paper with a printing plate prepared by an ink jet recording process have been made. For example, methods of forming an image by an ink jet process to prepare a directly made planographic printing plate have been proposed (see, for example, Japanese Patent Application Laid-Open (JP-A) Nos. H05-204138 and H04-69244). However, these methods are problematic in that the strength of image areas formed by the ink and the adhesiveness of the image areas to a support, which are influenced by the hardness of cured ink droplets that have been ejected by ink jet recording and deposited on the support, are insufficient, and in that the printing durability of the planographic printing plate is therefore low.

To improve image strength, accelerating the curing of the ink by increasing light exposure energy has been being studied. However, use of a high-output light source generates heat, leading to thermal deformation of supports of some types of raw materials, deteriorated ink deposition accuracy, formation of distorted images, and, consequently, deteriorated image quality.

### SUMMARY OF THE INVENTION

There is a need for a method of producing a planographic printing plate that results in improved accuracy of ejecting a photo-polymerizable ink composition and depositing the composition on a recording medium, and that provides an image, which is obtained by curing the composition, having high strength and high quality, and that provides a planographic printing plate having excellent printing durability, and that provides high-quality prints, and for the planographic printing plate.

The invention has been made under such circumstances.

A first aspect of the invention provides a method of producing a planographic printing plate, including ejecting a photo-polymerizable ink composition containing at least one polymerization-initiating substance having a molar extinction coefficient of 1,000 M⁻¹cm⁻¹ or more in the wavelength range of 400 nm to 700 nm on a support, and polymerizing and curing the ink deposited on the support by irradiation of the ink with light from a light source having an output of 1,000 W or less.

A second aspect of the invention provides a planographic printing plate having an image that is prepared by ejecting a photo-polymerizable ink composition containing at least one polymerization-initiating substance having a molar extinction coefficient of 1,000 M⁻¹cm⁻¹ or more in the wavelength range of 400 nm to 700 nm on a support, and polymerizing and curing the ink composition deposited on the support by irradiation of the ink composition with light from a light source having an output of 1,000 W or less.

Usually, high-output light sources used for curing a photo-polymerizable ink composition generate a large quantity of heat. Therefore, when such a light source is used for preparation of a planographic printing plate, the generated heat may deform the support, resulting in deteriorated image quality. Although the action of the invention has not been made clear, the action is supposedly as follows. The ink composition used in the invention, which contains a polymerization-initiating substance having a molar extinction coefficient of 1,000 M⁻¹cm⁻¹ or more in the wavelength range of 400 nm to 700 nm, is sensitive to visible light. As a result, the degree of the curing of the ink composition can be accelerated even by irradiation of light from a light source that emits mainly visible light at a low output at a suppressed heating value. Thus, the method provides a high-quality image having excellent printing durability which image can be used for preparation of a planographic printing plate.

### DETAILED DESCRIPTION

Hereinafter, the invention will be described in detail.

The method of producing a planographic printing plate according to the invention includes an ink jet recording process where a photo-polymerizable ink composition containing at least one polymerization-initiating substance having a molar extinction coefficient of 1,000 M⁻¹cm⁻¹ or more in the wavelength range of 400 nm to 700 nm is ejected and deposited on a support, and is polymerized and cured by irradiating the ink composition with light emitted from a light source having an output of 1,000 W or less.

At first, the photo-polymerizable ink composition used in the method of producing a planographic printing plate according to the invention will be described. [Photo-polymerizable ink composition]

The photo-polymerizable ink composition preferably used in the invention contains at least one polymerization-initiating substance having a molar extinction coefficient of 1,000 M⁻¹cm⁻¹ or more in the wavelength range of 400 nm to 700 nm. [Polymerization-initiating substance having molar extinction coefficient of 1,000 M⁻¹cm⁻¹ or more in wavelength range of 400 nm to 700 nm]

As described above, the ink composition in the invention contains at least one polymerization-initiating substance having a molar extinction coefficient of 1,000 M⁻¹cm⁻¹ or more in the wavelength range of 400 nm to 700 nm. The polymerization-initiating substance preferably has a molar extinction coefficient of 3,000 M⁻¹cm⁻¹ or more in the light wavelength range of 400 nm to 450 nm, more preferably a molar extinction coefficient of 5,000 M⁻¹cm⁻¹ or more in the light wavelength range of 400 nm to 450 nm, and most preferably a molar extinction coefficient of 5,000 M⁻¹cm⁻¹ or more at a wavelength of 405 nm.

The polymerization-initiating substance may be a polymerization initiator or a combination of at least one polymerization initiator and at least one spectral sensitizer. When polymerization of the ink composition can be initiated and advanced with a polymerization initiator alone, the polymerization-initiating substance in the composition is the polymerization initiator. When a polymerization initiator and a spectral sensitizer that improves the function of the polymerization initiator are used together, the polymerization initiator is the combination of a polymerization initiator and a spectral sensitizer, which is selected according to the type of the polymerization initiator.

The polymerization initiator used in the invention is preferably a 2,4,6-substituted-1,3,5-triazine compound represented by the following Formula (I).

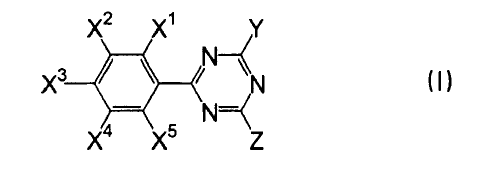

In Formula (I), Y and Z independently represent an alkyl group, an aryl group, or an aralkyl group, and at least one of them is a mono-, di-, or, tri-halogen-substituted methyl group. These groups may have at least one substituent. X¹ to X⁵ independently represent a hydrogen atom or a monovalent substituent, but not all of X¹ to X⁵ are hydrogen atoms.

When any one of X¹ to X⁵ represents a monovalent substituent, the substituent group is preferably a halogen atom, a halogenated alkyl group, a cyano group, a nitro group, a sulfoxide group, a sulfone group, a sulfonium group, an ammoniumgroup, or a dialkylamino group.

Such compounds are, for example, compounds described in JP-A No. H05-281728, paragraph Nos. [0016] to [0019]. Typical examples thereof include p-trifluoromethylphenylbis(trichloromethyl)triazine, p-cyanophenylbis(trichloromethyl)triazine, tetrafluorophenylbis(trichloromethyl)triazine, and p-dimethylaminophenylbis(trichloromethyl)triazine.

Also, the polymerization initiator is preferably a diazonium salt represented by the following Formula (II).

Ar²¹-N⁺≡N Z²¹⁻ (II)

In Formula (II), Ar²¹ represents an aryl group that has 20 or fewer carbon atoms and that may have at least one substituent. Typical examples of the substituent include halogen atoms, a nitro group, alkyl groups having 12 or fewer carbon atoms, alkoxy groups having 12 or fewer carbon atoms, aryloxy groups having 12 or fewer carbon atoms, alkylamino groups having 12 or fewer carbon atoms, dialkylamino groups having 12 or fewer carbon atoms, arylamino groups having 12 or fewer carbon atoms, and diarylamino groups having 12 or fewer carbon atoms. Z²¹⁻ represents a counter ion selected from the group consisting of halide, perchlorate, tetrafluoroborate, hexafluorophosphate, and sulfonate ions, and is preferably a perchlorate ion, a hexafluorophosphate ion, or an arylsulfonate ion.

Examples of the compounds include compounds described as compounds [ON-1] to [ON-5] in JP-A No. 2001-125260, paragraph No. [0027], and these compounds are also used preferably in the invention.

Examples of polymerization initiators used in combination with at least one spectral sensitizer include aromatic ketones, benzoin derivatives such as benzoin and benzoin ether, acylphosphine oxide compounds, onium salts such as sulfonium and iodonium salts, organic peroxides, hexaarylbiimidazole compounds, ketoxime esters, borates, azinium compounds, metallocene compounds, and compounds having at least one carbon-halogen bond.

Typical examples of the onium salts such as sulfonium and iodonium salts include compounds described in JP-A No. 2001-125260, paragraph Nos. [0025], [0026], and [0028].

The spectral sensitizer is preferably a compound represented by the following Formula (III).

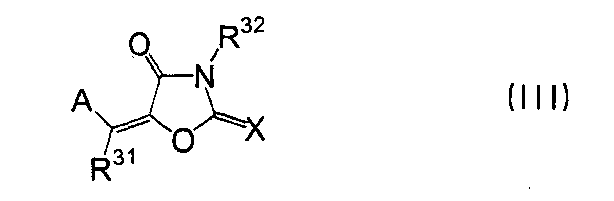

In Formula (III), "A" represents an aromatic or heterocyclic ring, and X represents an oxygen atom, a sulfur atom or -N(R³³)-. R³¹ to R³³ independently represent a hydrogen atom or a monovalent substituent consisting of a non-metal atom or atoms. "A" and R³¹, and/or R³² and R³³ may be bonded to each other to form an aliphatic or aromatic ring.

This spectral sensitizer is preferably used in combination with a triazine polymerization initiator. The compound is described in detail in, for example, JP-A No. 2001-100412, and combinations each including at least one spectral sensitizer and at least one initiator described in paragraph Nos. [0039] and [0040] of the application may be preferably used as the polymerization-initiating substance in the invention.

Also, the spectral sensitizer is preferably a compound represented by the following Formula (IV).

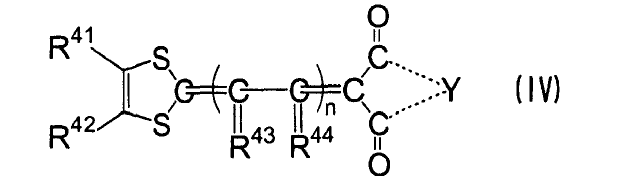

In Formula (IV), R⁴¹ and R⁴² independently represent a hydrogen atom, a halogen atom, an alkyl group, an aryl group, a heterocyclic group, or a carboxy group. R⁴¹ and R⁴² may be bonded to each other to form a ring. R⁴³ and R⁴⁴ independently represent a hydrogen atom, a halogen atom, an alkyl group or an aryl group. Y represents a non-metal atomic group necessary to form a ring. At least one of R⁴¹, R⁴² and Y has one or more groups selected from -COOH, -COOR⁴⁵, -NHSO₂R⁴⁵, -CONHCOR⁴⁵, and -CONHSO₂R⁴⁵ as at least one substituent. R⁴⁵ represents an alkyl group, an aromatic group, or an aromatic alkyl group. n is an integer of 0 to 4.

Typical examples of such a spectral sensitizer include compound Nos. 1 to 10 described in JP-A No. H11-174674, paragraph No. [0028], and at least one of them may be preferably used in the invention.

The initiator, the sensitizer, and the combination thereof for use in the ink composition may be selected properly according to the application of the ink composition, but at least one of these compounds needs to satisfy the requirement of "a molar extinction coefficient of 1,000 M⁻¹cm⁻¹ or more in the wavelength range of 400 nm to 700 nm".

The content of the polymerization-initiating substance in all the solid matter of the ink composition according to the invention is preferably in the range of 0.01 to 30 mass %, and more preferably in the range of 0.1 to 20 mass %. The content is the total content of the polymerization-initiating substance. That is, when the polymerization-initiating substance is a combination of a polymerization initiator and a spectral sensitizer, the content of the polymerization-initiating substance is the total amount of the polymerization initiator and the spectral sensitizer. The content ratio of the polymerization initiator to the spectral sensitizer is determined properly according to the properties of these compounds. The content ratio of the polymerization initiator to the spectral sensitizer is generally in the range of 100/0 to 10/90.

### [Polymerizable compound]

The ink composition in the invention may include at least one polymerizable compound. At least one of the at least one polymerizable compound is preferably a known radically or cationically polymerizable monomer or oligomer. Examples of the monomer and the oligomer include (meth)acrylates, (meta)acrylamides, (meth)acrylic acid, maleic acid and derivatives thereof, styrenes, olefins, vinyl ethers, vinyl esters, epoxy compounds, oxetane compounds, and cyclic esters. In the invention, two or more of these compounds may be used together.

### [Radically polymerizable monomer]

The (meth)acrylate for use in the invention is, for example, monofunctional (meth)acrylate. Examples thereof include hexyl (meth)acrylate, 2-ethylhexyl (meth)acrylate, tert-octyl (meth)acrylate, isoamyl (meth)acrylate, decyl (meth)acrylate, isodecyl (meth)acrylate, stearyl (meth)acrylate, isostearyl (meth)acrylate, cyclohexyl (meth)acrylate, 4-n-butylcyclohexyl (meth)acrylate, bornyl (meth)acrylate, isobornyl (meth)acrylate, benzyl (meth)acrylate, 2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, butoxymethyl (meth)acrylate, 3-methoxybutyl (meth)acrylate, alkoxymethyl (meth)acrylates, alkoxyethyl (meth)acrylates, 2-(2-methoxyethoxy)ethyl (meth)acrylate, 2-(2-butoxyethoxy)ethyl (meth)acrylate, 2,2,2-trifluoroethyl (meth)acrylate, 1H,1H,2H,2H-perfluorodecyl (meth)acrylate, 4-butylphenyl (meth)acrylate, phenyl (meth)acrylate, 2,4,5-trimethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, hydroxyalkyl (meth)acrylates, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, oligoethylene oxide monomethyl ether (meth)acrylate, polyethylene oxide (meth)acrylate, oligoethylene oxide (meth)acrylate, oligoethylene oxide monoalkyl ether (meth)acrylates, polyethylene oxide monoalkyl ether (meth)acrylate, dipropylene glycol (meth)acrylate, polypropylene oxide monoalkyl ether (meth)acrylate, oligopropylene oxide monoalkyl ether (meth)acrylates, 2-methacryloyloxyethylsuccinic acid, 2-methacryloyloxyhexahydrophthalic acid, 2-methacryloyloxyethyl-2-hydroxypropyl phthalate, butoxydiethylene glycol (meth)acrylate, trifluoroethyl (meth)acrylate, perfluorooctylethyl (meth)acrylate, 2-hydroxy-3-phenoxypropyl (meth)acrylate, EO-modified phenol (meth)acrylate (phenol modified with ethylene oxide (meth)acrylate), EO-modified cresol (meth)acrylate, EO-modified nonylphenol (meth)acrylate, and PO (polyethylene oxide) -modified nonylphenol (meth)acrylate, and EO-modified-2-ethylhexyl (meth)acrylate.

The (meth)acrylate for use in the invention is, for example, bifunctional (meth)acrylate. Examples thereof include 1,6-hexanediol di(meth)acrylate, 1,10-decanediol di(meth)acrylate, neopentyl glycol di(meth)acrylate, 2,4-dimethyl-1,5-pentanediol di(meth)acrylate, butylethylpropanediol (meth)acrylate, ethoxylated cyclohexanemethanol di(meth)acrylate, polyethylene glycol di(meth)acrylate, oligoethylene glycol di(meth)acrylate, ethylene glycol di(meth)acrylate, 2-ethyl-2-butyl-butanediol di(meth)acrylate, neopentyl glycol hydroxypivalate di(meth)acrylate, EO-modified bisphenol A di(meth)acrylate, bisphenol-F polyethoxy di(meth)acrylate, polypropylene glycol di(meth)acrylate, oligopropylene glycol di(meth)acrylate, 1,4-butanediol di(meth)acrylate, 2-ethyl-2-butylpropanediol di(meth)acrylate, 1,9-nonane di(meth)acrylate, propoxylated ethoxylated bisphenol A di(meth)acrylate, and tricyclodecane di(meth)acrylate.

The (meth)acrylate for use in the invention is, for example, trifunctional (meth)acrylate. Examples thereof include trimethylolpropane tri(meth)acrylate, trimethylolethane tri(meth)acrylate, trimethylolpropane alkylene oxide-modified tri(meth)acrylates, pentaerythritol tri(meth)acrylate, dipentaerythritol tri(meth)acrylate, trimethylolpropane tri((meth)acryloyloxypropyl) ether, isocyanurate alkylene oxide-modified tri(meth)acrylates, dipentaerythritol propionate tri(meth)acrylate, tri((meth)acryloyloxyethyl)isocyanurate, hydroxypivalaldehyde-modified dimethylolpropane tri(meth)acrylate, sorbitol tri(meth)acrylate, propoxylated trimethylolpropane tri(meth)acrylate, and ethoxylated glycerol triacrylate.

The (meth)acrylate for use in the invention is, for example, tetrafunctional (meth)acrylate. Examples thereof include pentaerythritol tetra(meth)acrylate, sorbitol tetra(meth)acrylate, ditrimethyrollpropane tetra(meth)acrylate, dipentaerythritol propionate tetra(meth)acrylate, and ethoxylated pentaerythritol tetra(meth)acrylate.

The (meth)acrylate for use in the invention is, for example, pentafunctional (meth)acrylate. Examples thereof include sorbitol penta(meth)acrylate, and dipentaerythritol penta(meth)acrylate; and

The (meth)acrylate for use in the invention is, for example, hexafunctional (meth)acrylate. Examples thereof include dipentaerythritol hexa(meth)acrylate, sorbitol hexa(meth)acrylate, phosphazene alkyleneoxide-modified hexa(meth)acrylate, and captolactone-modified dipentaerythritol hexa(meth)acrylate.

When a compound may be methacrylate or acrylate, or both of them in this specification, the compound may be designated as (meth)acrylate.

Examples of monomers other than (meth)acrylates include the followings:
Examples of (meta)acrylamides include (meta)acrylamide,
N-methyl-(meta)acrylamide, N-ethyl-(meta)acrylamide, N-n-propyl-(meta)acrylamide,
N-n-butyl-(meta)acrylamide, N-t-butyl-(meta)acrylamide,
N-butoxymethyl(meta)acrylamide, N-isopropyl-(meta)acrylamide,
N-methylol-(meta)acrylamide, N,N-dimethyl-(meta)acrylamide,
N,N-diethyl-(meta)acrylamide, and (meth)acryloylmorpholine. (Meta)acrylamides mean both of methacryloylamides and acrylamides.

Typical examples of olefins include dicyclopentadiene, ethylene, propylene, 1-butene, 1-pentene, vinyl chloride, vinylidene chloride, isoprene, chloroprene, butadiene, 2,3-dimethylbutadiene, and cyclohexadiene.

Typical examples of styrenes include styrene, methylstyrene, dimethylstyrene, trimethylstyrene, ethylstyrene, isopropylstyrene, chloromethylstyrene, methoxystyrene, acetoxystyrene, chlorostyrene, dichlorostyrene, bromostyrene, methyl vinylbenzoate, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, 4-methoxystyrene, and 4-t-butoxystyrene.

Typical examples of vinyl ethers include methyl vinyl ether, butyl vinyl ether, hexyl vinyl ether, methoxy vinyl ether, 2-ethylhexyl vinyl ether, methoxyethyl vinyl ether, cyclohexyl vinyl ether, and chloroethyl vinyl ether.

Examples of monomers other than the above compounds include butyl crotonate, hexyl crotonate, dimethyl itaconate, dibutyl itaconate, diethyl maleate, dimethyl maleate, dibutyl maleate, diethyl fumarate, dimethyl fumarate, methyl vinyl ketone, phenyl vinyl ketone, methoxyethyl vinyl ketone, N-vinyloxazolidone, N-vinylpyrrolidone, vinylformamide, vinylidene chloride, methylene malononitrile, vinylidene, diphenyl-2-acryloyloxyethyl phosphate, diphenyl-2-methacryloyloxyethyl phosphate, dibutyl-2-acryloyloxyethyl phosphate, dioctyl-2-methacryloyloxyethyl phosphate, vinyl acetate, vinyl benzoate, and N-vinylcarbazole.

### [Cationically polymerizable compound]

The polymerizable monomer may also be a cationically polymerizable monomer. The cationically polymerizable monomer has characteristically a small volumetric shrinkage rate when cured. Therefore, the cationically polymerizable monomer is preferably used in the invention. Also, a combination of a radically polymerizable monomer and a cationically polymerizable monomer is preferably used.

Examples of the cationically polymerizable monomer include oxetanes and epoxy monomers. Typical examples of oxetanes include 3-ethyl-3-(hydroxymethyl)oxetane, 3-ethyl-3-(phenoxymethyl)oxetane, 3-ethyl-3-(2-ethylhexyloxymethyl)oxetane, bis[1-ethyl(3-oxetanyl)methyl ether], and bis[1-ethyl(3-oxetanyl)methyl]xylylene ether.

Typical examples of the epoxy compounds include (3',4'-epoxycyclohexane)methyl-3,4-epoxycyclohexane carboxylate, 1,2,8,9-diepoxylimonene, and bisphenol A diglycidyl ether.

### [Radically and cationically polymerizable monomer]

A radically, cationically polymerizable monomer may also be used as the polymerizable compound for use in the invention.

Examples of the radically and cationically polymerizable monomer for use in the invention include 4-vinylcyclohexene-1,2-epoxide, 3-ethyl-3-(acryloyloxymethyl)oxetane, and 3-ethyl-3-(methacryloyloxymethyl)oxetane.

The content of the polymerizable compound(s) in all the solid matter of the ink composition for use in the invention, which may be the total content when plural polymerizable compounds are used in the invention, is preferably in the range of 10 to 99 mass %, and more preferably in the range of 30 to 95 mass %.

The ink composition preferably used in the method of producing a planographic printing plate according to the invention may further include any of various compounds used in ordinary ink compositions in addition to the polymerization-initiating substance having a molar extinction coefficient of 1,000 M⁻¹cm⁻¹ or more in the particular light wavelength range and the polymerizable compound as essential components, according to the application of the ink composition. Such a compound or compounds are used to such an extent that the compound(s) does not adversely influence the advantageous effects of the invention. Hereinafter, these components will be described.

The ink composition in the invention preferably contains at least one colorant for improvement in image visibility. The at least one colorant may be appropriately selected from known dyes and pigments.

The ink composition may further include at least one surfactant for improvement in the ink-ejecting property of the ink composition and/or at least one polymerization inhibitor for improvement in ink stability during storage.

In addition, the ink composition may include at least one polymer for improvement in mechanical properties of an image obtained by using the ink composition. Typical examples thereof include (meth)acrylic polymers, polyurethane resins, polyamide resins, polyester resins, epoxy resins, phenol resins, polycarbonate resins, polyvinyl butyral resins, polyvinyl formal resins, polyvinyl alcohol, polyethylene glycol, polyethylene oxide, polypropylene glycol, shellac resins, vinyl resins, rubber-based resins, waxes, and other natural resins.

Since the ink composition for use in the invention contains as the main component at least one polymerizable compound, which has low molecular weight, the ink composition may not include a solvent. However, the ink composition may contain water and/or at least one organic solvent. Examples of the organic solvent include ketone solvents such as acetone and methyl ethyl ketone; alcoholic solvents such as methanol, ethanol, propanol, 1-methoxy-2-propanol, ethylene glycol, diethylene glycol, dipropylene glycol, diethylene glycol monoethyl ether, tripropylene glycol, and tripropylene glycol monomethyl ether; aromatic solvents such as toluene; ester solvents such as ethyl acetate, butyl acetate, isopropyl acetate, and γ-butylolactone; ether solvents such as tetrahydrofuran and diethylene glycol diethyl ether; and hydrocarbon solvents such as ISOPAR G commercially available from Exxon.

The ink composition in the invention having the above-described composition is ejected by an ink jet recording process, deposited on a recording medium and polymerized and cured by irradiating the ink composition with light having a wavelength suitable for the type of the polymerization-initiating substance, such as ultraviolet rays. When the ink composition contains at least one polyfunctional polymerizable compound in a particular amount, the ink composition is cured rapidly by the light irradiation and forms an image having high strength and a sufficiently high cross-linking density.

### [Physical properties of ink composition]

The photo-polymerizable ink composition used in the invention to form an image area preferably has a viscosity of 20 to 100 mPa.s at 25°C from the viewpoint of easy handling, because the ink composition is used in the ink jet recording process described below. The ink composition in the invention can be used in any of known ink jet recording apparatuses. Usually, the ink composition is kept at a constant temperature within the range of 25 to 100°C when the ink is ejected by such a recording apparatus. In this case, the viscosity of the ink composition is more preferably 2 to 50 mPa.s.

### [Method of producing planographic printing plate]

In the method of producing a planographic printing plate according to the invention, an image is formed by ejecting the photo-polymerizable ink composition containing a particular polymerization-initiating substance by an ink jet recording process and polymerizing and curing the ink composition deposited on a recording medium by light irradiation at a particular energy level.

Hereinafter, each of the steps of the method for producing a planographic printing plate according to the invention will be described one by one.

### [Ink jet recording process]

In the method of producing a planographic printing plate according to the invention, the aforementioned ink composition containing a particular polymerization-initiating substance is ejected, and cured on a recording medium by a known ink jet recording apparatus. Such an ink jet recording apparatus generally has at least one ink-holding unit. The ink-holding unit will be described first.

The ink-holding unit is preferably a known ink cartridge. The ink-holding unit may be a deformable container that can become a tank in an ink jet recording apparatus, as disclosed in JP-A No. H05-16377. When the ink-holding unit is a sub-tank, it becomes easy to supply ink to an ink head, as disclosed in JP-A No. H05-16382. Alternatively, the ink-holding unit may be a cartridge that is disclosed in JP-A No. H08-174860 and which, when the pressure in the ink-supplying chamber of the apparatus decreases, supplies ink to an ink head by movement of the valve of the cartridge. A method for giving a negative pressure to appropriately keep meniscus in the head by the ink-holding unit is, for example, a method of applying a negative pressure by using the height of the ink-holding unit, i.e., water head, by using the capillary pressure of a filter placed in the ink channel of a head, by controlling the pressure with, for example, a pump, or by using the capillary pressure of an ink absorbent that absorbs an ink, as disclosed in JP-A No. S50-74341.

To supply an ink composition from the ink-holding unit to the head, the ink-holding unit may be directly to the head or may be connected to a channel, such as a tube, connected with the head. The ink-holding unit and the channel are preferably made of a material having a good wetting property with respect to the ink, or are surface-finished with such a material.

The ink may be ejected, for example, by a method including successively ejecting ink droplets and directing the ink droplets according to a desired image in which method some ink droplets are not deposited on the recording medium and which is disclosed in JP-ANo. H05-104725, or by a so-called on-demand method of ejecting only ink droplets corresponding to an image area. In the on-demand method, the ink may be ejected by ink pressure generated by deforming a structure, such as a piezoelectric element, as disclosed in JP-A No. H05-16349. Alternatively, the ink may be ejected by pressure generated by expansion of the ink due to vaporization thereof with supplied heat energy, as disclosed in JP-ANo. H01-234255. Alternatively, the ink may be ejected and deposited on a recording medium under an electric field, as disclosed in JP-A No. 2001-277466.

The ink jet print head to eject an ink composition may have at least one nozzle having the shape described in JP-A No. H05-31908. When the ink jet recording apparatus has plural head units each having plural nozzles disposed in line, it is possible to increase printing speed.

It is possible to form an image at a high speed by providing a so-called line head with nozzles whose total width is equal to or more than the width of a portion of a recording medium which portion is other than the margin and by moving the medium while ink droplets are ejected from these nozzles, as described in JP-A No. S63-160849.

Undesired deposition of some portions (mist) of ink droplets or ink droplets themselves on a nozzle surface can be prevented by surface treatment of the nozzle surface, as disclosed in JP-A No. H05-116327. However, when such treatment may not prevent completely the deposition, it is preferable to clean the surface with a blade, as disclosed in JP-A No. H06-71904. Ink droplets ejected from nozzles do not always have the same amount. To appropriately preserve meniscus in such a case, it is preferable that the ink physical properties are kept within respective desired ranges by ejecting ink droplets on an area other than an image area and replenishing ink to the head, as disclosed in JP-ANo. H11-157102. However, such treatment may not completely prevent ingress or generation of air bubbles in the head. The air bubbles may be removed by simultaneously, compulsorily sucking ink having deteriorated physical properties and including the air bubbles from the head in such a case, as described in JP-A No. H11-334092. When a printer is left unused for a long period of time, the nozzle surface may be covered with a cap to protect the nozzle surface, as disclosed in JP-A No. H11- 138830. However, these treatments may not completely allow necessary ejection of an ink. When a printer has at least one nozzle that undesirably cannot eject ink, the printer forms an image with a missing portion in some cases. For prevention of such a problem, it is effective to check whether all nozzles can eject ink, as disclosed in JP-A No. 2000-343686.

In ejecting ink, it is preferable to keep the temperature of the ink constant within a particular tolerance so as to make the viscosity of the ink constant. In order to attain this, the ink jet recording apparatus preferably has an ink temperature detector, an ink heater, and a controller for controlling heating the ink according to the detected ink temperature. It is also preferable that the ink jet recording apparatus has a controller for controlling energy to be applied to an ink-ejecting unit according to the ink temperature.

Superimposition of ink droplets ejected which is attained by simultaneously conducting mechanical movement of a head unit in one direction and intermittent movement of a recording medium in a direction perpendicular to the direction of the head unit movement is effective in suppressing image unevenness caused by the intermittent movement of the recording medium, and thus, in providing a high-quality image, as described in JP-ANo. H06-115099. In such a case, the relationship between image quality and recording speed can be appropriately adjusted by properly adjusting the relationship among the moving speed of the head unit, the moving distance of the recording medium, and the number of nozzles. Alternatively, similar effects can be obtained by fixing the head unit, but by mechanically intermittently moving, in one direction, the recording medium that is reciprocally moved in a direction perpendicular to the direction of the intermittent movement of the recording medium.

In forming an image, the diameter of each ink droplet on the ink-receiving layer of a recording medium is preferably 5 to 500 µm. To attain this, the diameter of each ink droplet ejected from a nozzle is preferably 5 to 200 µm, and the nozzle diameter is preferably 5 to 200 µm. The amount of each droplet ejected is preferably 20 pL or less, and more preferably 10 pL or less, particularly in preparing a printing plate.

The number of pixels per inch in an image formed is preferably 50 to 4,000 dpi. To attain this, the density of nozzles of a head is preferably 10 to 4,000 dpi. However a high-density image can be formed even by placing a head having a low nozzle density in a direction non-perpendicular to the moving direction of a recording medium, or by placing plural head units having a low nozzle density and staggered from each other. As described above, a high-density image can also be recorded by conveying a recording medium to a certain distance due to movement of a head at a low nozzle pitch which movement is caused by reciprocally moving the head or the recording medium and by ejecting ink droplets on different positions of the recording medium.

When the distance between a head and a recording medium is too long, air flow caused by movement of the head or the recording medium disturbs ejection of ink droplets, leading to deterioration in positional accuracy of the ink droplets on the recording medium. Meanwhile, when the distance is too short, the head and the recording medium may be sometimes in contact with each other due to surface irregularity of the recording medium or vibration of a conveyer mechanism. Accordingly, the distance is preferably kept approximately in the range of 0.5 to 2 mm.

### [Polymerization of ink by light irradiation]

In the invention, the output of a light source used for light irradiation is preferably 1,000 W or less, and more preferably 500 W or less in order to control undesired thermal deformation of the support of a recording medium or a planographic printing plate precursor and improve ejection accuracy of an ink composition.

A light source used for polymerization and curing of an ink composition in the method of producing a planographic printing plate according to the invention may be an ordinary light source used for such purpose such as a mercury lamp or a metal halide lamp, or a light-emitting diode, a semiconductor laser, or a fluorescent lamp. A light-emitting diode or a laser source mainly emitting visible light is preferably used. High-output light sources mainly emitting ultraviolet rays may case problems regarding heat generation. Therefore, it is necessary that the output of a light source is kept within the aforementioned range recited in the invention.

As described above, a low-output light irradiation unit emitting mainly visible light is preferably selected in the method according to the invention,.

When the ink composition contains at least one radically polymerizable compound as the main component and is cured by radical polymerization, the polymerization is inhibited by oxygen. Such an ink composition can be cured at low energy consumption by light irradiation thereof in a low-oxygen concentration state, i.e., under a non-active gas atmosphere such as a nitrogen atmosphere.

When an ink-ejecting nozzle is irradiated with light for curing of ink, ink mist adhering to the nozzle surface may be cured and the cured matter may hinder ink ejection. To minimize the amount of the mist undesirably adhering to the nozzle surface, it is preferable that the ink jet recording apparatus has a light-shielding unit. Specifically, the light-shielding unit is, for example, a barrier wall for preventing the irradiation on a nozzle plate or a unit for limiting the incident angle of light irradiated with respect to a recording medium for reduction of stray light.

### [Recording medium]

There is no particular limit to the type of a recording medium used in combination with the ink composition, because the ink composition used in the method according to the invention is polymerized and cured rapidly by light irradiation and provides a highly strong image, as described above. Therefore, the recording medium may be any one of recording media used in known ink jet recording methods, such as paper, resin sheets, a paper or resin sheet having an ink-receiving layer, or a metal sheet according to the application of the recording medium. However, the support of the recording medium preferably has surface roughness Ra in the range of 0.2 to 10 µm from the viewpoint of adhesiveness between the recording medium and an ink image. The recording medium preferably has an ink-receiving layer.

In the invention, the ink composition is used to form the image area of a planographic printing plate (printing ink-receiving hydrophobic area), and the recording medium is selectively made of materials of planographic printing plate precursors. Even when the support of the recording medium is made of any material such as aluminum or resin in such a case, the support preferably has surface roughness Ra in the range of 0.2 to 10 µm. The surface roughness Ra of the recording medium (support) in the invention is arithmetic mean roughness (Ra), as measured on the basis of JIS B0601-1994, which is incorporated by reference herein.

### [Support of planographic printing plate]

The recording medium used in the method of producing a planographic printing plate according to the invention preferably has a support whose surface is hydrophilized and an ink-receiving layer as the outermost surface.

The support of the recording medium has rigidity, durability and dimensional stability, and otherwise there is no particular limit thereto. Examples thereof include paper, paper sheets laminated with at least one plastic material (for example, polyethylene, polypropylene, or polystyrene), metal plates (made of, for example, aluminum, zinc, or copper), plastic films (made of, for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal), and paper or plastic films having at least one laminated or vapor-deposited layer made of at least one of the aforementioned metals.

Among them, the support of the recording medium in the invention is preferably a polyester film or an aluminum plate, and, because of relatively good dimensional stability and relatively low cost, more preferably an aluminum plate. The aluminum plate is preferably a pure aluminum plate or an alloy plate containing aluminum as the main component and a trace amount of foreign elements. The support may also be a plastic film on which aluminum is laminated or deposited. Examples of the foreign elements in the aluminum alloys include silicon, iron, manganese, copper, magnesium, chromium, zinc, bismuth, nickel, and titanium. The content of the foreign elements in the alloy is preferably 10 mass % or less. In the invention, the aluminum plate is preferably subjected to surface treatment. Hereinafter, the aluminum support will be described.

### [Aluminum support]

The support in the invention is preferably made of pure aluminum. However, it is difficult to refine aluminum and prepare completely pure aluminum. Therefore, the aluminum support may contain a trace amount of foreign elements.

Thus, there is no particular limit to the composition of the aluminum plate used in the invention, and may have any of publicly known or used compositions including aluminum. The thickness of the aluminum plate for use in the invention is generally approximately 0.1 mm to 0.6 mm, preferably approximately 0.15 mm to 0.4 mm, and more preferably 0.15 mm to 0.3 mm.

The aluminum plate may be subjected to surface treatment, such as surface roughening treatment and anodic oxidation treatment, if necessary. The surface treatment will be described below.

Before the surface of the aluminum plate is roughened, the plate is subjected to degreasing treatment, which is conducted to remove rolling oil on the surface, with a surfactant, an organic solvent, or an aqueous alkaline solution, if necessary. The roughening treatment of the aluminum plate surface is performed by any one of various methods, for example, by a mechanically surface-roughening method, or a method of dissolving and roughening the surface electrochemically, or a method of dissolving the surface selectively in a chemical manner. The mechanically surface-roughening method that can be used may be a known method, such as a ball polishing method, a brush polishing method, a blast polishing method or a buff polishing method. The electrochemically surface-roughening method may be a method of performing surface-roughening in a hydrochloric acid or nitric acid electrolyte by use of alternating current or direct current. As disclosed in JP-ANo. S54-63902, a combination of the two may be used.

### <Description of surface treatment for preparing aluminum grain shape>

The support of the planographic printing plate in the invention may be obtained by subjecting an aluminum plate to surface treatment conducted to form surface grain shape on the surface of the aluminum plate. The support of the planographic printing plate in the invention can be obtained by subjecting an aluminum plate to the surface-roughening treatment and the anodic oxidation treatment. There is no particular limit to the production process of the support. The production method may include various processes other than the surface-roughening treatment and the anodic oxidation treatment. Typical examples of the method for forming surface grain include, but are not limited to, a method including sequentially subjecting an aluminum plate to mechanical surface-roughening treatment, alkali etching treatment, desmutting treatment with an acid and electrochemical surface-roughening treatment with an electrolyte; a method including sequentially subjecting an aluminum plate to mechanical surface-roughening treatment, alkali etching treatment, desmutting treatment with an acid and plural times of electrochemical surface-roughening treatment with different electrolytes; a method including sequentially subjecting an aluminum plate to alkali etching treatment, desmutting treatment with acid and electrochemical surface-roughening treatment with an electrolyte; and a method including sequentially subjecting an aluminum plate to alkali etching treatment, desmutting treatment with acid and plural times of electrochemical surface-roughening treatment with different electrolytes. In these methods, the electrochemical surface-roughening treatment may be followed by alkali etching treatment and desmutting treatment with an acid. The support of the planographic printing plate in the invention obtained by these methods has as the surface layer thereof a layer with irregularities having two or more types of cycles, and is thus superior both in stain resistance and printing durability. Each of the processes of the surface treatments will be described below in detail.

### <Mechanical surface-roughening treatment>

The mechanical surface-roughening treatment is effective as surface-roughening treatment, since it can form a surface having irregularities of an average wavelength of 5 to 100 µm less expensively than electrochemical surface-roughening treatment. The method of the mechanical surface-roughening treatment may be, for example, a wire brush graining method for scratching an aluminum surface with a metal wire, a ball graining method for graining an aluminum surface with abrasive balls and an abrasive, or a brush graining method for graining an aluminum surface with a nylon brush and an abrasive, which is described in JP-A Nos. H06-135175 and S50-40047. A transfer method for pressing an irregular surface against an aluminum plate may also be used. More specifically, methods described in JP-A Nos. S55-74898, S60-36195, and S60-203496, and a method performing plural times of transfer, which is described in JP-A No. H06-55871, and a method using an elastic surface, which is described in JP-A No. H06-024168 may be used.

Also, a method for repeatedly performing transfer with a transfer roll with etched fine irregularities by electric discharge machining, shot blast, laser, plasma etching or other means, and a method for bringing an irregular surface with fine particles coating into contact with an aluminum plate, and applying pressure repeatedly onto the surface to repeatedly transfer the irregularities pattern corresponding to the average diameter of the fine particles to the aluminum plate may be used. The method for imparting fine irregularities to a transfer roll may be a known method as described in JP-A Nos. H03-8635, H03-66404 and S63-65017. Alternatively, the roll surface may be formed with fine grooves from two directions, using a dice, bite, or laser to form rectangular irregularities on the surface. The roll surface may be subjected to known etching treatment to round off the formed rectangular irregularities. Quenching, hard chromium plating or other treatment may be performed to increase the hardness of the surface. The method for the mechanical surface-roughening treatment may also be any of methods described in JP-A Nos. S61-162351 and S63-104889. In the invention, at least two of the aforementioned methods may be used together in consideration of productivity. Such mechanical surface-roughening treatment is preferably performed before the electrochemical surface-roughening treatment.

### <Electrochemical surface-roughening treatment>

Electrochemical surface-roughening treatment may be performed with electrolytes for use in conventional electrochemical surface-roughening treatment using alternating current. In particular, electrolytes mainly composed of hydrochloric acid or nitric acid electrolyte can form a characteristic irregularity structure on the surface. The electrolyzing treatment in the invention is preferably performed by conducting the first and second electrolyzing treatment using alternating waveform current in an acidic solution before and after the cathodic electrolyzing treatment. The cathodic electrolyzing treatment generates hydrogen gas on the surface of the aluminum plate to form smut, which makes the surface state uniform and enables uniform electrolyzing roughening during the subsequent electrolyzing treatment using alternating waveform current. The electrolyzing treatment can be performed, for example, by an electrochemical graining method (electrolytic graining method) as described in Japanese Patent Application Publication (JP-B) No. S48-28123 and U.K. Patent No. 896,563. The electrolytic graining method uses alternating current of sine waveform, but may use a special waveform as described in JP-A No. S52-58602. The waveform as described in JP-A No. H03-79799 may be used. The methods as described in JP-A Nos. S55-158298, S56-28898, S52-58602, S52-152302, S54-85802, S60-190392, S58-120531, S63-176187, H01-5889, H01-280590, H01-118489, H01-148592, H01-178496, H01-188315, H01-154797, H02-235794, H03-260100, H03-253600, H04-72079, H04-72098, H03-267400 and H01-141094 may be also used. In addition to the methods described above, electrolysis can be performed using alternating current having a special frequency, which was supposed as a production method for an electrolytic condenser. The method is, for example, described in U.S. Patent Nos. 4,276,129 and 4,676,879.

Various electrolytic baths and power sources have been suggested, and those described in U.S. Patent No. 4,203,637 JP-ANos. S56-123400, S57-59770, S53-12738, S53-32821, S53-32822, S53-32823, S55-122896, S55-132884, S62-127500, H01-52100, H01-52098, S60-67700, H01-230800 and H03-257199 may be used. In addition, those described in JP-A Nos. S52-58602, S52-152302, S53-12738, S53-12739, S53-32821, S53-32822, S53-32833, S53-32824, S53-32825, S54-85802, S55-122896, and S55-132884, JP-B Nos. S48-28123, and S51-7081, and JP-ANos. S52-133838, S52-133840, S52-133844, S52-133845, S53-149135 and S54-146234 may also be used.

Examples of the acidic solution serving as an electrolyte include nitric acid, hydrochloric acid, and electrolytes described in U.S. Patent Nos. 4,671,859, 4,661,219, 4,618,405, 4,600,482, 4,566,960, 4,566,958, 4,566,959, 4,416,972, 4,374,710, 4,336,113, and 4,184,932.

### Nitric acid electrolysis

Electrochemical surface-roughening treatment using an electrolyte mainly composed of nitric acid can form pits having an average aperture size of 0.5 to 5 µm. When the electricity quantity is relatively high, the electrolysis reaction is concentrated, which can generate honeycomb pits larger than 5 µm. To obtain such grain, the total of the electricity quantity used for the anodic reaction of the aluminum plate at the time that the electrolysis reaction is completed is preferably 1 to 1,000 C/dm², and more preferably 50 to 300 C/dm². The electric current density at that time is preferably 20 to 100 A/d m². When a concentrated or hot nitric acid electrolyte is used, a small wave structure having an average aperture size of 0.2 µm or less can be formed.

### Hydrochloric acid electrolysis

Since hydrochloric acid has a high dissolution power for aluminum, it can form fine irregularities on the aluminum surface by the application of slight electrolysis. Such fine irregularities have an average aperture size of 0.01 to 0.2 µm, and are uniformly generated on the entire surface of an aluminum plate. To obtain such grain, the total of the electricity quantity used for the anodic reaction of the aluminum plate at the time that the electrolysis reaction is completed is preferably 1 to 100 C/dm², and more preferably 20 to 70 C/dm². The electric current density at that time is preferably 20 to 50 A/dm².

In this electrochemical surface-roughening treatment using the electrolyte made mainly of hydrochloric acid, large undulations in a crater form can be simultaneously formed by making the total of electricity quantities for taking charge of the anodic reaction as large as a value ranging 400 to 1000 C/dm². In this case, fine irregularities having an average aperture size of 0.01 to 0.4 µm are superimposed with the crater undulations, which have an average aperture size of 10 to 30 µm, and the fine irregularities are made in the entire surface.

### <Alkali etching>

The alkali etching treatment is treatment for bringing the aluminum plate into contact with an alkali solution to dissolve the surface layer thereof.

The object of the alkali etching treatment performed before the electrolyzing treatment is, when no mechanical surface-roughening treatment has been conducted, to remove the rolling oil, stains, or natural oxidation film from the surface of the aluminum plate (rolled aluminum), and when the mechanical surface-roughening treatment has been performed, to dissolve the edge of the irregularities formed by the mechanical surface-roughening treatment to modify the surface with steep irregularities into a surface having smooth undulations.

In the case of conducting no mechanical surface-roughening treatment before the alkali etching treatment, the etching amount is preferably 0.1 to 10 g/m², and more preferably 1 to 5 g/m². When the etching amount is less than 0.1 g/m², rolling oil, stains, or naturally-oxidized film may remain, and it may become impossible to generate uniform pits by subsequent electrolytic surface-roughening treatment, generating unevenness. Meanwhile, when the etching amount is 0.1 to 10 g/m², rolling oil, stains, or naturally-oxidized film can be sufficiently removed. Roughening conducted to attain etching amount more than 10 g/m² is economically disadvantageous.

In the case of conducting the mechanical surface-roughening treatment before the alkali etching treatment, the etching amount is preferably from 3 to 20 g/m², and more preferably from 5 to 15 g/m². When the etching amount is less than 3 g/m², the irregularities made by the mechanical surface-roughening treatment may not be smoothened. Thus, in the subsequent electrochemical treatment, uniform pits may not be formed. Additionally, staining may increase at the time of printing. On the other hand, when the etching amount is more than 20 g/m², irregularities may disappear.

The objects of the alkali etching treatment performed immediately after the electrolytic surface-roughening treatment are to dissolve smut formed in the acidic electrolyte, and to dissolve the edge of the pits formed by the electrolytic surface-roughening treatment. The pits formed by the electrolytic surface-roughening treatment are varied by the type of the electrolyte, and therefore the preferred etching amount is varied. However, the etching amount in the alkali etching treatment performed after the electrolytic surface-roughening treatment is preferably 0.1 to 5 g/m². When a nitric acid electrolyte is used, the etching amount needs to be higher than that when a hydrochloric acid electrolyte is used. When the electrolytic surface-roughening treatment is conducted plural times, the alkali etching treatment may be performed after each treatment, if necessary.

Examples of the alkali used in the alkali solution include caustic alkalis and alkali metal salts. Specific examples of the caustic alkalis include caustic soda and caustic potassium. Specific examples of the alkali metal salts include alkali metal silicates such as sodium metasilicate, sodium silicate, potassium metasilicate, and potassium silicate; metal carbonates such as sodium carbonate and potassium carbonate; alkali metal aluminates such as sodium aluminate and potassium aluminate; alkali metal aldonates such as sodium gluconate and potassium gluconate; and alkali metal hydrogen phosphates such as disodium hydrogen phosphate, dipotassium hydrogen phosphate, trisodium phosphate, and tripotassium phosphate. The alkali solution is preferably a solution of a caustic alkali or a solution containing both of a caustic alkali and an alkali metal aluminate, since the solutions give a high etching rate and are inexpensive. The alkali solution is more preferably an aqueous caustic soda solution.

### <Desmutting treatment>

After the electrolytic surface-roughening treatment and the alkali etching treatment, washing with an acid (desmutting treatment) is conducted to remove the smuts remaining on the surface. Examples of the used acid include nitric acid, sulfuric acid, phosphoric acid, chromic acid, hydrofluoric acid, and fluoroboric acid. The desmutting treatment is conducted, for example, by bringing the aluminum plate into contact with an acidic solution that has an acid concentration of 0.5 to 30% by mass, in which the acid is hydrochloric acid, nitric acid, or sulfuric acid and which contain 0.01 1 to 5% by mass of aluminum ions. Examples of a method for bringing the aluminum plate into contact with the acidic solution include a method of passing the aluminum plate through a bath in which the acidic solution is put, a method of immersing the aluminum plate into a bath in which the acidic solution is put, and a method of spraying the acidic solution onto the surface of the aluminum plate. In the desmutting treatment, waste of the aqueous solution made mainly of nitric acid or the aqueous solution made mainly of hydrochloric acid discharged in the electrochemical surface-roughening treatment or wastes of an aqueous solution made mainly of sulfuric acid discharged in acidic oxidation treatment, which will be detailed later, can be used as the acidic solution. The liquid temperature in the desmutting treatment is preferably from 25 to 90°C. The time for the treatment is preferably from 1 to 180 seconds. Aluminum and aluminum alloy may be dissolved in the acidic solution used in the desmutting treatment.

### <Anodic oxidation treatment>

The aluminum plate whose surface is roughened as described above is subjected to alkali-etching treatment and neutralizing treatment, if necessary. Thereafter, the aluminum plate is subjected to anodic oxidation treatment, if necessary, in order to improve the water retentivity or abrasion resistance of the surface. The electrolyte used in the anodic oxidation treatment of the aluminum plate is any one selected from various electrolytes which can form a porous oxide film. Sulfuric acid, phosphoric acid, oxalic acid, chromic acid, or a mixed acid thereof is generally used. The concentration of the electrolyte may be appropriately determined depending on the kind of the electrolyte.

Treatment conditions for the anodic oxidation cannot be specified uniquely, since the conditions vary depending on the used electrolyte. However, the following conditions are generally suitable: an electrolyte concentration of 1 to 80% by mass, a solution temperature of 5 to 70°C, a current density of 5 to 60 A/dm², a voltage of 1 to 100 V, and an electrolyzing time of 10 seconds to 5 minutes. When the amount of the anodic oxide film is less than 2.0 g/m², non-image areas of the planographic printing plate are easily scared so that the so-called "scar blemishes", which result from ink adhesion to scared areas at the time of printing, easily occur.

### <Hydrophilic layer and hydorophilizing treatment>

A hydrophilic layer is formed on the support and the hydrophilic layer may be the anodic oxidation film. However, it is preferable that hydrophilizing treatment is conducted on the anodic oxidation film. The hydrophilic surface refers to a surface having a contact angle with water of smaller than 10°C, and the contact angle is preferably smaller than 5°C. Furthermore, after the hydrophilizing treatment, the hydrophilizing compound is preferably adsorbed by the anodic oxidation film.

Examples of the hydrophilizing treatment include potassium zirconium fluoride treatment described in U.S. Patent No. 2,946,638, phosphomolybdate treatment described in U.S. Patent No. 3,201,247, alkyl titanate treatment described in U.K. Patent No. 1,108,559, polyacrylic acid treatment described in German Patent No. 1,091,433, polyvinylphosphonic acid treatment described in German Patent No. 1,134,093 and U.K. Patent No. 1,230,447, phosphonic acid treatment described in JP-B No. S44-6409, phytic acid treatment described in U.S. Patent No. 3,307,951, treatment with a salt of a hydrophilic organic polymer compound and a divalent metal described in JP-A Nos. S58-16893 and S58-18291, and dipping treatment with a polyvalent sulfonic acid compound such as tamol.

Furthermore, undercoating of at least one of phosphates described in JP-A No. S62-019494, water-soluble epoxy compounds described in JP-A No. S62-033692, phosphoric acid-modified starch described in JP-A No. S62-097892, diamine compounds described in JP-A No. S63-056498, inorganic or organic amino acids described in JP-ANo. S63-130391, organic phosphonic acids containing at least one carboxy or hydroxy group described in JP-A No. S63-145092, compounds containing amino and phosphonic acid groups described in JP-A No. S63-165183, specific carboxylic acid derivatives described in JP-A No. H02-316290, phosphates described in JP-A No. H03-215095, compounds each having one amino group and one phosphoric oxyacid group described in JP-A No. H03-261592, phosphates described in JP-A No. H03-215095, aliphatic or aromatic phosphonic acids, such as phenylphosphonic acid, described in JP-A No. H05-246171, sulfur atom-containing compounds, such as thiosalicylic acid, described in JP-ANo. H01-307745, and compounds having at least one phosphoric oxyacid group described in JP-A No. H04-282637. Coloring with at least one acidic dye described in JP-A No. S60-64352 may also be carried out.

Hydrophilizing treatment is preferably conducted by immersing the aluminum plate into an aqueous solution of alkali metal silicate such as sodium silicate or potassium silicate can be performed.

In the embodiment of the invention, the deposit of silicate is preferably 1.0 to 20.0 mg/m², and more preferably 2.0 to 17.0 mg/m². When the deposit of silicate is 1.0 mg/m² or more, stain resistance is increased. When the deposit of silicate is 20.0 mg/m² or less, the resulting planographic printing plate has good printing durability, and burning printing durability.

### <Washing with water>

The aluminum plate is preferably washed with water after each of the aforementioned steps. Water used in the washing may be pure water, well water, and/or tap water. A nip unit may be used to prevent ingress of processing solution into a subsequent step.

The support for use in the invention is surface-roughened and surface-hydrophilized to suitable degrees by combining the aforementioned surface treatments. A planographic printing plate precursor (i.e., recording medium) preferably has an ink-receiving layer described below on the hydrophilic surface of the support.

### <Ink-receiving layer>

The planographic printing plate for use in the invention has an ink-receiving layer on the support having a hydrophilic surface. The ink-receiving layer contains one or more compounds selected from the group consisting of organic fluorinated compounds having a perfluoroalkyl group and compounds having a dimethylsiloxane skeleton (hereinafter, referred to as particular water-repellent compounds) for prevention of ink blurring. In order to provide the ink-receiving layer a removing property with dampening water and in order to thus effectively prevent staining in a non-image area, it is preferable to use at least one hydrophilic resin together with the particular water-repellent compound(s) in forming the ink-receiving layer containing a particular water-repellent compound.

Hereinafter, the particular water-repellent compounds will be described.

### <Organic fluorinated compound having perfluoroalkyl group>

The fluorinated compound usable in the invention is preferably a compound represented by Formula R_{F}-Rpol.

In the formula, R_{F} represents at least one linear or branched perfluoroalkyl group having three or more carbon atoms; and Rpol represents a polar group such as carboxylic acid or a salt thereof, or sulfonic acid or a salt thereof, phosphoric acid or a salt thereof, phosphonic acid or a salt thereof, an amino group or a salt thereof, quaternary ammonium salt, a polyethyleneoxy skeleton, a polypropyleneoxy skeleton, a sulfonamido group, an ether group, or a betaine structure. Among these groups, the polar group preferably has the structure of a sulfoxyl group or a salt thereof, because it less interacts with silicate and thus is well removable.

R_{F} preferably has a CₙF₂ₙ₊₁CₘH₂ₘCOO- skeleton for prevention of ink blurring, and more preferably has two or more CₙF₂ₙ₊₁CₘH₂ₘCOO- skeletons in the molecule thereof. In the formula, n is an integer of two or more; and m is an integer of one or more.

Hereinafter, typical examples of the fluorinated compound usable in the invention [(F-1) to (F-19)] are shown below, but the invention is not limited by them.

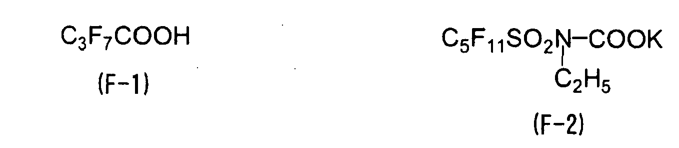

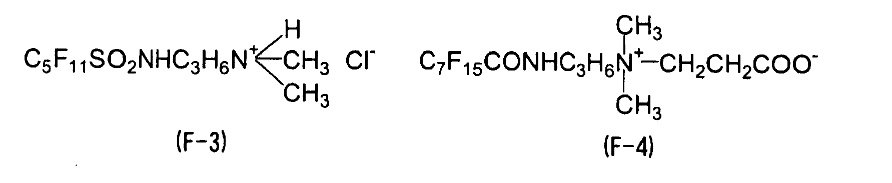

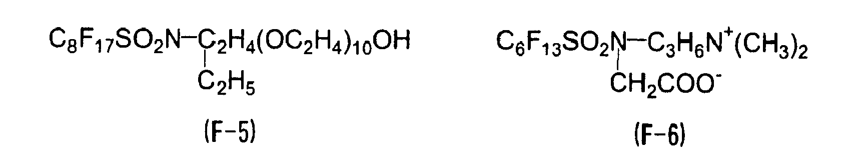

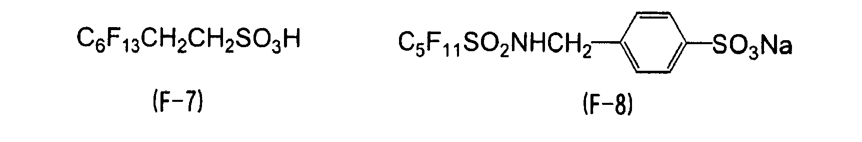

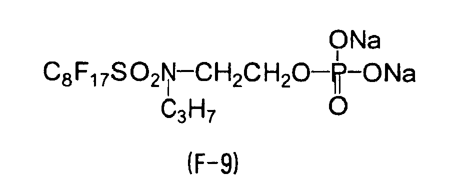

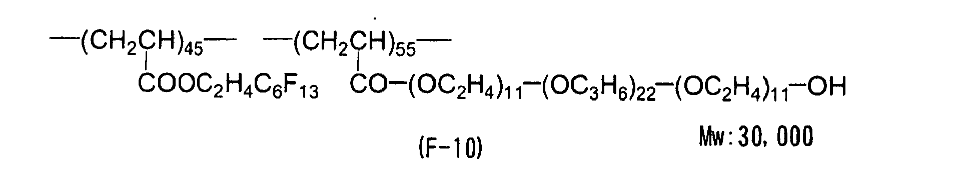

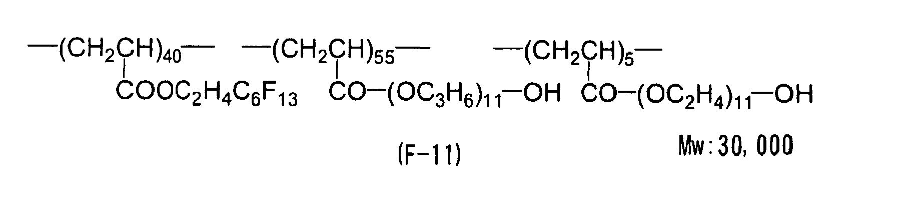

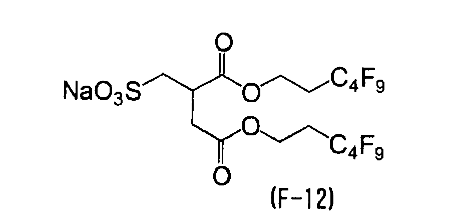

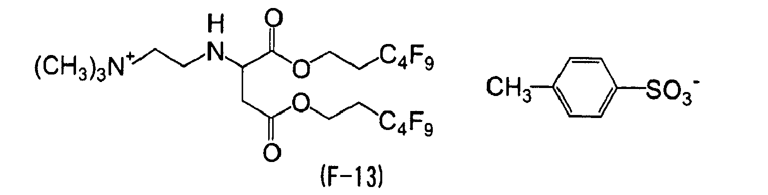

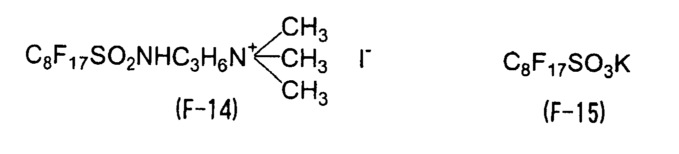

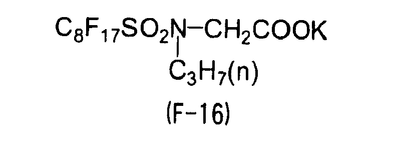

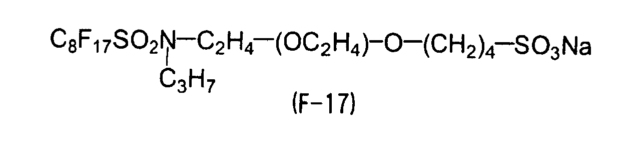

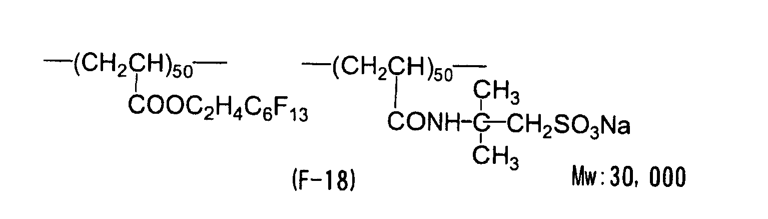

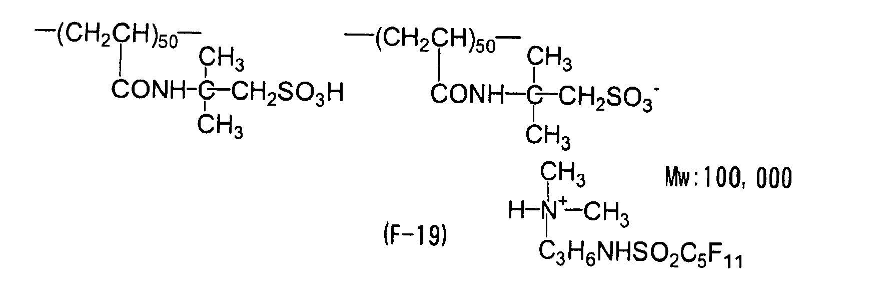

The fluorinated compound in the invention may be a fluorinated polymer compound. It is preferable that the fluorinated polymer compound has a surface-activating action and is soluble in water.

Specific examples of the fluorinated polymer surfactant include copolymers of at least one acrylate having at least one fluoroaliphatic group or at least one methacrylate having at least one fluoroaliphatic group and poly(oxyalkylene)acrylate(s) or poly(oxyalkylene)methacrylate(s). In copolymering the monomer(s) and the polymer(s), the content of acrylate(s) or methacrylate(s) having at least one fluoroaliphatic group in all the raw materials is preferably 7% to 60% by mass. The molecular weight of the copolymer is preferably 3,000 to 100,000.

The fluoroaliphatic group may be linear or branched, and preferably contains a fluorine content of 40% by mass or more. Specific examples of the acrylate or methacrylate having at least one fluoroaliphatic group include N-butylperfluorooctanesulfonamidoethyl acrylate, N-propylperfluorooctanesulfonamidoethyl acrylate, and methylperfluorooctanesulfonamidoethyl acrylate. The molecular weight of the polyoxyalkylene group in the poly(oxyalkylene)acrylate or methacrylate is preferably 200 to 3,000. Examples of the oxyalkylene group include oxyethylene, oxypropylene and oxybutylene groups. The oxyalkylene group is preferably an oxyethylene, and/or oxypropylene group. For example, the poly(oxyalkylene)acrylate may be acrylate or methacrylate having 8 to 15 mol of oxyethylene groups. As needed, a dimethyl siloxane group may be bonded to at least one of the ends of the polyoxy alkylene group so as to reduce the foam-forming property of the compound.

The fluorinated surfactant can be commercially available, and may be a commercial product in the invention. Two or more of the fluorinated surfactants may be used together in the invention. Examples of the commercial product include SURFLON S-111, S-112, S-113, S-121, S-131, S-141, S-145, S-381 and S-382 manufactured by Asahi Glass Co., Ltd. MEGAFAC F-110, F120, F-142D, F-150, F-171, F177 and F781 manufactured by Dainippon Ink And Chemicals, Incorporated, FLUORAD FC-93, FC-95, FC-98, FC-129, FC135, FX-161, FC170C, FC-171 and FC176 manufactured by Sumitomo 3M Limited, and FT-248, FT-448, FT-548, FT-624, FT-718 and FT-738 manufactured by Bayer Japan Ltd.

The particular water-repellent compound usable in the invention may also be a compound having a dimethylsiloxane skeleton, and specific examples thereof include the following.

### <Polydimethylsiloxane compound>

The polydimethylsiloxane compound is, for example, a silicon-containing surfactant. The surfactant is preferably soluble in water because of its good removing property. Specific examples thereof include dimethylsiloxane methyl(polyoxyethylene) copolymer, dimethylsiloxane methyl(polyoxypropylene) copolymer, and dimethylsiloxane methyl(polyoxyethylene/polyoxypropylene) copolymer.

### <Hydrophilic resin>

The ink receiving layer can be prepared by blending one or more compounds selected from the group consisting of those organic fluorinated compounds and compounds having at least one dimethylsiloxane skeleton, and at least one hydrophilic resin.

Such combined use of the particular ink-repellent compound(s) and the hydrophilic resin(s) in forming the ink-receiving layer further improves the stain resistance and reduces ink bleeding.

In this instance, the coating amount of the organic fluorinated surfactant(s) is preferably 50 mg/m² or less and more preferably in the range of 1 to 10 mg/m².

The coating amount of the hydrophilic resin(s) is preferably 100 mg/m² or less, and more preferably 1 to 50 mg/m². Such combined use of the particular water-repellent compound(s) and the hydrophilic resin(s) in the ink-receiving layer further improves the ink repellency and stain resistance of a non-image area, which is other than an image area where ink droplets are deposited.

The hydrophilic resin(s) usable in the invention needs to be soluble in water. Typical examples include water-soluble cellulose having at least one carboxylic group or salt thereof (e.g., carboxymethyl cellulose), acrylic or methacrylic polymer and copolymers thereof, acrylic, methacrylic, vinyl or styrenic hydrophilic resins having at least one sulfonic group or salt thereof, hydrophilic resins containing at least one amido group such as polyacrylamide and polyvinylpyrrolidone, hydrophilic resins having at least one amino group, and hydrophilic resins having at least one phosphoric group or salt thereof such as phosphoric acid-modified starch described in JP-A No. S62-097892.

Also, the hydrophilic resin is preferably a compound having at least one onium group. The compound having an onium salt is described in detail in JP-A Nos. 2000-10292 and 2000-108538. Also, the hydrophilic resin may be a compound selected from macromolecular compounds having a structural unit represented by poly(p-vinylbenzoic acid). Specific examples of the macromolecular compound include a copolymer of p-vinylbenzoic acid and a vinylbenzyl triethyl ammonium salt and a copolymer of p-vinylbenzoic acid and vinylbenzyl trimethyl ammonium chloride.

Also, the hydrophilic resin may be a copolymer having at least one repeating unit containing at least one ethylenic unsaturated bond and at least one repeating unit containing at least one functional group that interacts with the support surface and described in JP-A No. 2005-125749.

Among these compounds, the hydrophilic resin is preferably is a polymer having a sulfonate skeleton because the polymer reduces ink bleeding and exhibits stain resistance.

### <Formation of ink-receiving layer>

The organic ink receiving layer may be provided by the following method. A solution is prepared by dissolving the above-described organic compound(s) in water or an organic solvent such as methanol, ethanol, or methyl ethyl ketone, or a mixed solvent thereof, and is applied to an aluminum plate and drying thereon. Alternatively, an aluminum plate is dipped in a solution prepared by dissolving the above-described organic compound(s) in water or an organic solvent such as methanol, ethanol, or methyl ethyl ketone, or a mixed solvent thereof to make the above-described compounds adsorbed by the aluminum plate, followed by washing the aluminum plate with water, and drying the plate.

In the former method (application method), the solution having an organic compound content of 0.005 to 10% by mass can be applied by one of various methods. In the latter method (dipping method), the concentration of the organic compound(s) in the solution is 0.01 to 20% by mass, and preferably 0.05 to 5% by mass. The dipping temperature is 20 to 90°C, and preferably 25 to 50°C. The dipping time is 0.1 second to 20 minutes, and preferably 2 seconds to 1 minute.

The method for forming an ink receiving layer is preferably the application method from the viewpoints of suppression of adsorption of the organic compound(s) onto the surface of the substrate onto which surface the compound need not be applied, and improvement in stain prevention effect during printing.

In this way, a recording medium (planographic printing plate precursor) preferably used in the method of the invention, i.e., a method of producing a directly made planographic printing plate, can be obtained by forming an ink-receiving layer on a support having a hydrophilic surface. As described above, the surface roughness Ra of the ink-receiving layer surface is preferably in the range of 0.2 to 10 µm.

The ink-receiving layer is preferably used to receive an ink composition ejected in an ink jet recording process.

### [Polyester film medium or paper medium]

A polyester film medium or a paper medium having a suitable ink-receiving layer on the surface of a polyester film or a paper sheet can also be preferably used as the planographic printing plate precursor (recording medium) in the invention. For example, a recording medium described in JP-A No. 2003-118254 and having a layer containing porous filler particles, a binder resin that is a composite material having a resin with bonds containing metal atoms, semi-metal atoms and/or metal and semi-metal atoms bound to each other via an oxygen atom and a particular polymer compound; or a recording medium described in JP-A No. 2003-19873 and having a layer containing (1) porous filler particles, (2) at least one metal alcoholate compound selected from metal alcoholates, chelate compounds obtained by reacting the metal alcoholate and β-diketone and/or β-ketoester, and partial hydrolysate obtained by reacting the chelate compound and water, and (3) a binder resin that is a composite material of a resin containing metal atoms, semi-metal atoms and/or metal and semi-metal atoms bound to each other via an oxygen atom and an organic polymer containing a group capable of forming at least one hydrogen bond with the resin can be used preferably in the invention.

Hereinafter, the planographic printing plate in the invention prepared by using the recording medium will be described.

### [Planographic printing plate]

The planographic printing plate in the invention has an image formed by ejecting a photo-polymerizable ink composition that contains at least one polymerization initiator having a molar extinction coefficient 1,000 M⁻¹ cm⁻¹ or more in the wavelength range of 400 nm to 700 nm, depositing the ink composition on a support, and polymerizing and curing the deposited ink composition by light irradiation from a light source having an output of 1,000 W or less.

The planographic printing plate according to the invention is prepared by the method of producing a planographic printing plate according to the invention. Specifically, an image is formed by image-wise ejecting and depositing a photo-polymerizable ink composition on the surface of a recording medium (planographic printing plate precursor) preferably having an ink-receiving layer and a particular surface roughness by an ink jet recording process and polymerizing and curing the deposited ink by light irradiation from a particular light source. After an image obtained by curing the ink composition is formed, it is preferable to remove the ink-receiving layer from a portion (non-image area) of the recording medium in which portion no image is formed in order to prevent staining in the non-image area. Thus, ink curing results in formation of the image area, and removal of the remaining portion (non-image area) of the ink-receiving layer makes the hydrophilic surface of the support of the recording medium bare, which ensures hydrophilicity of the non-image area and improves the dampening water retaining property of the non-image area.

Before printing, the image area formed by an ink jet recording process may be subjected to preliminary treatment the same as that to which ordinary planographic printing plates are subjected, such as treatment with gum mainly including gum arabic, at least one starch derivative, and at least one surfactant.

Typical examples of the gum include those described in JP-B Nos. S62-16834, S62-25118, and S63-52600, and JP-A Nos. S62-7595, S62-11693, and S62-83194. The ink-receiving layer is preferably removed with the gum solution during the gum treatment. The planographic printing plate thus obtained is placed in a planographic printing machine and used to conduct ordinary printing. The planographic printing plate may be used in printing without the gum treatment.

The directly made planographic printing plate obtained by the image-forming method in the invention is placed in a printing machine and ink and dampening water are supplied to the printing plate and the printing plate is used in printing by an ordinary method.

### [Dampening water]

Dampening water ordinarily used in planographic printing machines may be used as the dampening water used during printing in the invention. Generally, Dahlgren method using as the dampening water an aqueous solution containing isopropyl alcohol in an amount of approximately 20 to 25% was proposed and is widely used. However, isopropyl alcohol has a characteristic odor, requires a measure with respect to toxicity, and is regulated as Type II organic solvent in the Japanese Ordinance on Prevention of Organic Solvent Poisoning. Therefore, a method using a standby that takes the place of isopropyl alcohol and a method using a non-volatile or high-boiling point compound as a standby that takes the place of isopropyl alcohol were developed. For example, a dampening water composition containing a particular alkyleneoxide nonionic surfactant or a dampening water composition containing at least one adduct obtained by adding ethylene oxide or propylene oxide to alkylenediamine may also be used as the dampening water.

Even when the planographic printing plate obtained by the method of producing a planographic printing plate according to the invention is not subjected to the gum treatment or the ink-receiving layer is not removed by the gum treatment, the non-image area of the ink-receiving layer of the planographic printing plate is removed by the dampening water during printing. In other words, staining in the non-image area can be effectively suppressed by removing the ink-receiving layer with the dampening water in the early stage of printing and making the hydrophilic support of the printing plate bare.

### Examples

The invention will be illustrated while referring to the following Examples. However, the invention is not limited to these examples.

### [Example 1]

### [Production of planographic printing plate precursor]

### <Aluminum plate>

An aluminum alloy including 0.06% by mass of silicon, 0.30% by mass of iron, 0.005% by mass of copper, 0.001% by mass of manganese, 0.001% by mass of magnesium, 0.001% by mass of zinc and 0.03% by mass of titanium, with the balance made of Al and inevitable impurities, was used to prepare a molten metal. The molten metal was filtrated, and then an ingot having a thickness of 500 mm and a width of 1200 mm was produced by DC casting. Its surface portion was shaved with a surface-shaving machine so that the shaved portion had an average thickness of 10 mm. Thereafter, the shaved matter was kept at 550°C for about 5 hours. When the temperature thereof lowered to 400°C, the matter was subjected to hot rolling with a hot rolling machine to produce a rolled plate having a thickness of 2.7 mm. Furthermore, the rolled plate was heated at 500°C with a continuous annealing machine. Thereafter, the plate was so finished by cold rolling as to have a thickness of 0.24 mm. In this way, an aluminum plate in accordance with JIS 1050 was yielded. The aluminum plate was so trimed as to have a width of 1030 mm and was subjected to the following surface treatments.

### <Surface treatment>

Surface treatment was performed by continuously conducting the following treatments (a) to (j). Liquid was cleared away using a nip roller after each treatment and washing with water.

### (a) Mechanical surface-roughening treatment

The surface of the aluminum plate was mechanically roughened with rotary nylon brush rollers, while a suspension of an abrasive material (pumice) having a specific gravity of 1.12 and water was supplied to the aluminum plate surface as an abrasive slurry.

### (b) Alkali etching treatment

The aluminum plate was etched by spraying with an aqueous solution having a caustic soda concentration of 2.6% by mass and an aluminum ion concentration of 6.5% by mass and kept at 70°C. Thus, the surface layer of the aluminum plate was dissolved away so that the amount of dissolved aluminum was 6 g/ m². Thereafter, the aluminum plate was washed with water by spraying.

### (c) Desmutting treatment

The aluminum plate was subjected to desmutting treatment by spraying the plate with an aqueous solution having a nitric acid concentration of 1 % by mass (and containing 0.5% by mass of aluminum ions) and kept at 30°C, and was then washed with sprayed water. The aqueous nitric acid solution used in the desmutting treatment was waste liquid from a process of conducting electrochemical surface-roughening treatment using alternating current in an aqueous nitric acid solution.

### (d) Electrochemical surface-roughening treatment

AC voltage having a frequency of 60 Hz was used to continuously conduct an electrochemical surface-roughening treatment. The electrolytic solution used was a 10.5 g/L aqueous nitric acid solution (containing 5g/L of aluminum ions and 0.007% by mass of ammonium ions) kept at 50°C. The AC power source used was one providing a rectangular wave alternating current having, in fact, a trapezoidal waveform, wherein TP, which is the time required for the current value to increase from zero to the peak, was 0.8 msec, and the duty ratio was 1:1. Here, a carbon electrode was used as a counter electrode and a ferrite electrode was used as an auxiliary anode. An electrolytic bath was used. The current density was 30 A/dm² in terms of peak value, and the electricity quantity was 220 C/dmm² in terms of the sum of electricity at the time when the aluminum plate was functioning as an anode. 5% of the current flowing from the power source was supplied to the auxiliary anode. After this surface-roughening treatment, the aluminum plate was washed with water by spraying.

### (e) Alkali etching treatment

The aluminum plate was etched by spraying the plate with an aqueous solution having a caustic soda concentration of 26% by mass and an aluminum ion concentration of 6.5% by mass and kept at 32°C. Thus, the surface layer of the aluminum plate was dissolved away so that the amount of dissolved aluminum was 0.25 g/m². The smut containing mainly aluminum hydroxide and generated by the preceding step of electrochemical surface roughening with an alternating current was removed. Simultaneously, the edges of the formed pits were dissolved away and so rounded as to be smooth. Thereafter, the aluminum plate was washed with water by spraying.

### (f) Desmutting treatment

The aluminum plate was subjected to desmut treatment with an aqueous solution having a nitric acid concentration of 15% by mass (and containing 4.5% by mass of aluminum ions) and kept at 30°C, which solution was sprayed. The aluminum plate was then washed with sprayed water. The aqueous nitric acid solution used in the desmut treatment was waste liquid from the process of conducting the electrochemical surface-roughening treatment using alternating current in the aqueous nitric acid solution.

### (g) Electrochemical surface-roughening treatment

AC voltage having a frequency of 60 Hz was used to continuously conduct an electrochemical surface-roughening treatment. The electrolytic solution used was a 7.5 g/L aqueous chloric acid solution (containing 5 g/L of aluminum ions) kept at 35°C. The AC power source used was one providing a rectangular wave alternating current having, in fact, a trapezoidal waveform, wherein TP, which is the time required for the current value to increase from zero to the peak, was 0.8 msec, and the duty ratio was 1:1. Here, a carbon electrode was used as a counter electrode and a ferrite electrode was used as an auxiliary anode. An electrolytic bath was used. The current density was 25 A/dm² in terms of peak value, and the electricity quantity was 50 C/dmm² in terms of the sum of electricity at the time when the aluminum plate was functioning as an anode. After this surface-roughening treatment, the aluminum plate was washed with water by spraying.

### (h) Alkali etching treatment

The aluminum plate was etched by spraying the plate with an aqueous solution having a caustic soda concentration of 26% by mass and an aluminum ion concentration of 6.5% by mass and kept at 32°C. Thus, the surface layer of the aluminum plate was dissolved away so that the amount of dissolved aluminum was 0.20 g/m². The smut containing mainly aluminum hydroxide and generated by the preceding step of electrochemical surface roughening with an alternating current was removed. Simultaneously, the edges of the formed pits were dissolved away and so rounded as to be smooth. Thereafter, the aluminum plate was washed with water by spraying.

### (i) Desmutting treatment

The aluminum plate was subjected to a desmutting treatment by spraying the plate with an aqueous solution having a sulfuric acid concentration of 25% by mass (containing 0.5% by mass aluminum ions) and kept at 60°C. Thereafter, the aluminum plate was washed with water by spraying.

### (j) Anodizing process

The aluminum plate was anodized in an electrolyte solution of sulfuric acid to prepare a support for a planographic printing plate precursor A having an oxide film in an amount of 2.7 g/m².

### <Hydrophilization of support surface with silicate>

The support A thus prepared was immersed in an aqueous No.3 sodium silicate solution at 70°C for 13 seconds and then washed with water. The surface roughness Ra thereof , as determined as an average of five measurements at a cut-off of 0.8 mm at a test piece length of 3 mm by using Surfcom 575A surface roughness meter manufactured by Tokyo Seimitsu Co. Ltd., was 0.55 µm.

### <Ink-receiving layer>

An ink-receiving layer coating solution having the following composition was coated on the surface-hydrophilized support A with a wire bar and the resultant coating was dried at 80°C for 15 seconds to form a coated film. Thus, a planographic printing plate precursor A having a formed ink-receiving layer was prepared. The coating amount of the ink-receiving layer was 20 mg/m².
- Compound [ST-1] 0.12 g
- Poly(2-acrylamido-2-methyl-1-propanesulfonic acid) 0.18 g
- Deionized water 100 g

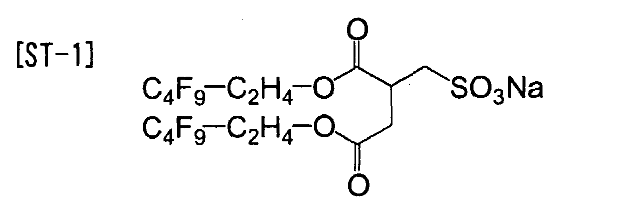

### [Preparation of photo-polymerizable ink composition]

A photo-polymerizable ink composition 1 was prepared by mixing and stirring the following components.

### -Photo-polymerizable ink composition 1-

- 4-(Phenylamino)-2-methoxybenzene diazonium hexafluorophosphate (polymerization initiator) 15 g
- Triethylene glycol divinyl ether (polymerizable compound) 20 g
- Dipropylene glycol diacrylate (polymerizable compound) 60 g
- Polyethylene glycol dimethacrylate (polymerizable compound) 20 g
- Ditrimethyrollpropane tetraacrylate (polymerizable compound) 20 g
- Bis[1-ethyl(3-oxetanyl)] methyl ether (polymerizable compound) 30 g
- 1,2,8,9-Diepoxylimonene (polymerizable compound) 30 g
- Cyan pigment (Pigment Blue 15:4) (colorant) 4 g
- SOLSPERSE 32000 (manufactured by Avecia) (pigment dispersant) 1 g
- Tris(N-nitroso-N-phenylhydroxyaluminato)aluminum (polymerization inhibitor) 0.01 g
- Copolymer of tridecafluorooctyl acrylate and polypropylene glycol monoacrylate (surfactant) 0.2 g

The molar extinction coefficient at a wavelength of 405 nm of the polymerization initiator used in the photo-polymerizable ink composition, as determined from the absorbance in methanol, was 5,000 M⁻¹cm⁻¹.

The molar extinction coefficient was determined in the following manner.

The initiator or sensitizer was dissolved in methanol; the absorbance of the methanol solution was determined with a spectroscopic absorption spectrometer, and the molar extinction coefficient was calculated from the mole concentration and the absorbance according to the Lambert-Beer's law.

### [Ink jet recording]

The photo-polymerizable ink composition 1 was ejected and cured on the planographic printing plate precursor A having a formed ink-receiving layer in the following manner in an ink jet recording process to give a planographic printing plate of Example 1.

In forming the image, a head-scanning image-forming apparatus carrying a shearing piezoelectric head (CA3 manufactured by Toshiba TEC Corp.) (minimum droplet amount of 6 pL, the number of nozzles of 318, and nozzle density of 150 nozzle/25.4 mm) on its movable carriage was used as the ink ejection head. An ink was placed in an ink tank having a pressure-reducing function and a capacity of 2 liter and degassed at a reduced pressure of -40 kPa. The ink was supplied through a Teflon (registered trade name) flexible tube having an inner diameter of 2 mm via a static-pressure control tank (capacity of 50 mL) into the head. The internal pressure of the head was adjusted to -6.6 kPa and the meniscus shape in the head nozzle region was controlled by adjusting the height of the static-pressure-type pressure tank with respect to the height of the head. The temperature of the ink in the head was controlled to 45°C by supplying water to the head by a water-circulating temperature control unit (SCINICS CH-201). The ink was ejected at a head drive voltage of 24 V in the eight-bit multi-drop mode or binary mode. The frequencies in the dot formation were respectively 4.8 kHz and 12 kHz. Bidirectional head interlacing printing was performed while the recording medium is conveyed stepwise in the multi-drop mode at an image-forming pitch of 8 bits under the condition of resolutions of 600 dpi in the head scanning direction (head scan speed: 203 mm/s) and 600 dpi in the recording medium conveying direction, or in the binary mode under the condition of resolutions of 1,200 dpi in the head scanning direction (head scan speed 254 mm/s) and 1200 dpi in the recording medium conveying direction. The image-forming apparatus had a wiper made of non-woven fabric for wiping the nozzle plate of the head in a non-contact state, and the head was cleaned, as needed.

### [Light irradiation]

When One to 60 seconds elapsed since ejection of the ink compositing by the ink jet-recording process, the ink composition was is irradiated with light emitted from two 150 W ultrahigh-pressure mercury lamps SHP manufactured by Phoenix Electric Co. Ltd. Here, the area of a region irradiated for one second was 20 cm² and the distance between the lamps and the printing plate precursor was 10 cm. Thus, the ink composition deposited on the printing plate was cured to form an image area. As a result, a planographic printing plate of Example 1 was obtained.

### [Evaluation of image quality]

Visual check of the planographic printing plate was made, and it was found that a continuous one-dot straight line image formed thereon had no distorted portion.

### [Printing durability test]

Printing was performed in LITHRONE printing machine manufactured by Komori Corp. by using dampening water IF 102 (manufactured by Fuji Photo Film Co.) and DIC-GEOS (N) black ink manufactured by Dainippon Ink and Chemicals, Inc., without gum treatment of the planographic printing plate. The printing durability was evaluated by determining the number of sheets printed when the density of the painted image became thinner by visual observation. Forty thousands sheets of good print were obtained.

### [Comparative Example 1]

A photo-polymerizable ink composition 2 was prepared and used to form an image and to prepare a planographic printing plate of Comparative Example 1 in the same manner as in Example 1, except that the polymerization initiator used in the photo-polymerizable ink composition 1 was changed to tri(p-chlorophenyl)sulfonium hexafluorophosphate. The molar extinction coefficient at a wavelength of 405 nm of the photopolymerization initiator was 0 M⁻¹cm⁻¹.

Evaluation of the planographic printing plate of Comparative Example 1 was conducted in the same manner as in Example 1. As a result, it was found that the straight line had no distorted portion but the number of good prints was 100, indicating that the planographic printing plate has extremely poor printing durability.

### [Example 2]

### Photo-polymerizable ink composition 3

- Diphenyl(2,4,6-trimethylbenzoyl)phosphine oxide (polymerization initiator) 5 g
- Hydroxycyclohexyl phenyl ketone (polymerization initiator) 5 g
- Compound [ZK-1] (having the following structure)(spectral sensitizer) 8 g
- Lauryl acrylate (polymerizable compound) 20 g
- Dipropylene glycol diacrylate (polymerizable compound) 100 g
- Polyethylene glycol dimethacrylate (polymerizable compound) 20 g
- Ditrimethyrollpropane tetraacrylate (polymerizable compound) 30 g
- Dipentaerythritol hexaacrylate (polymerizable compound) 10 g
- Copper (II) octakis(octyloxy)phthalocyanine (dye)(colorant) 2 g
- Tris(N-nitroso-N-phenylhydroxyaluminato) aluminum (polymerization inhibitor) 0.01 g
- Copolymer of tridecafluorooctyl acrylate and polypropylene glycol monoacrylate (surfactant) 0.2 g

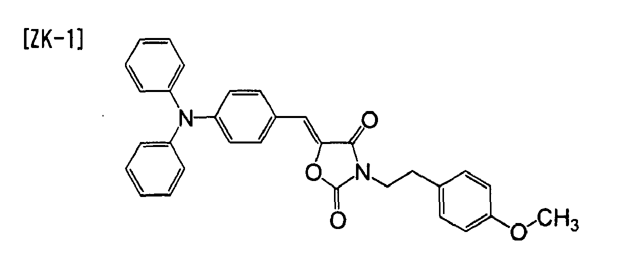

The molar extinction coefficient at a wavelength of 405 nm of the spectral sensitizer used in the photo-polymerizable ink composition 3, as calculated from the absorbance in methanol, was 37,000 M⁻¹cm⁻¹.

An image was formed on the planographic printing plate precursor A and a planographic printing plate of Example 2 was prepared in the same manner as in Example 1, except that the photo-polymerizable ink composition 1 was replaced with the photo-polymerizable ink composition 3.

The planographic printing plate of Example 2 was evaluated in the same manner as in Example 1. It was found that the straight line drawn had no distorted portion. The number of good prints was 70,000, indicating that the planographic printing plate has good printing durability.

### [Comparative Example 2]

A photo-polymerizable ink composition 4 was prepared and used to form an image and to prepare a planographic printing plate of Comparative Example 2 in the same manner as in Example 2, except that spectral sensitizer [ZK-1] was not used. The molar extinction coefficient at a wavelength of 405 nm of each of the photopolymerization initiators used in the ink composition 4 was less than 1,000 M⁻¹cm⁻¹.

Evaluation of the planographic printing plate of Comparative Example 2 was conducted in the same manner as in Example 1. As a result, it was found that the straight line had no distorted portion but the number of good prints was 2,000, indicating that the planographic printing plate has poor printing durability.

### [Example 3]

A photo-polymerizable ink composition 5 was prepared and an image was formed and a planographic printing plate of Example 3 was prepared in the same manner as in Example 2, except that spectral sensitizer [ZK-1] was replaced with the following compound [ZK-2].

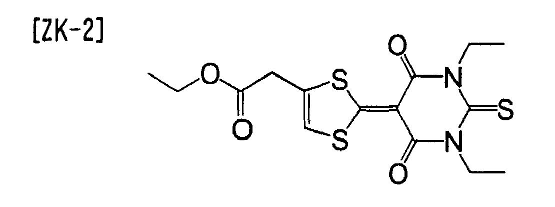

The molar extinction coefficient at a wavelength of 405 nm of the spectral sensitizer used in the photo-polymerizable ink composition 5, as calculated form the absorbance in methanol, was 64,000 M⁻¹cm⁻¹.

The planographic printing plate of Example 3 was evaluated in the same manner as in Example 1. It was found that the straight line drawn had no distorted portion. The number of good prints was 80,000, indicating that the planographic printing plate has good printing durability.

### [Example 4]

### Photo-polymerizable ink composition 6

- Compound [KS-1] (having the following structure) (polymerization initiator) 10 g
- Lauryl acrylate (polymerizable compound) 20 g
- Dipropylene glycol diacrylate (polymerizable compound) 100 g
- Polyethylene glycol dimethacrylate (polymerizable compound) 27 g
- Ditrimethyrollpropane tetraacrylate (polymerizable compound) 30 g
- Dipentaerythritol hexaacrylate (polymerizable compound) 10 g
- Compound [DY-1] (dye having the following structure)(colorant) 3 g
- Tris(N-nitroso-N-phenylhydroxyaluminato)aluminum (polymerization inhibitor) 0.01 g
- Copolymer of tridecafluorooctyl acrylate and polypropylene glycol monoacrylate (surfactant) 0.2 g

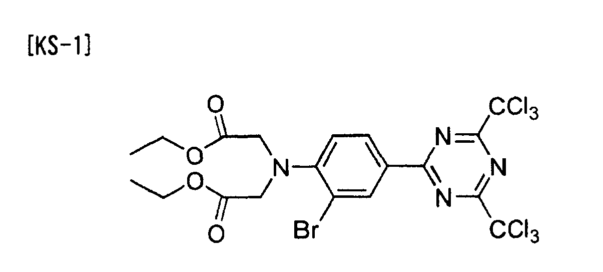

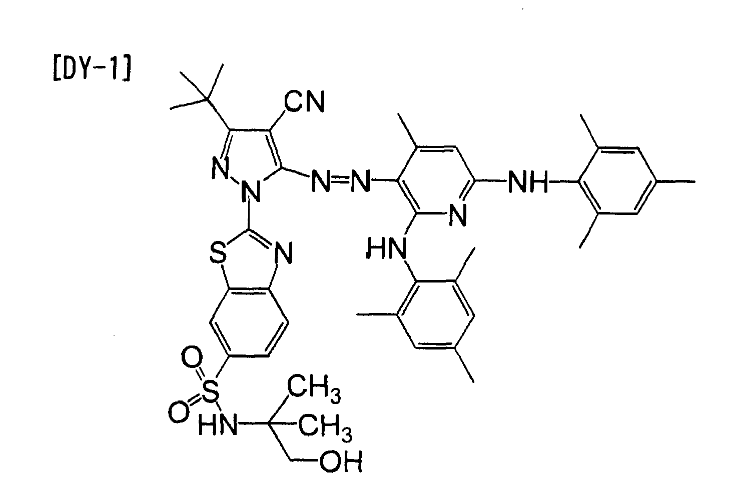

The molar extinction coefficient at a wavelength of 405 nm of the spectral sensitizer used in the photo-polymerizable ink composition 6, as calculated form the absorbance in methanol, was 8,000 M⁻¹cm⁻¹.

The planographic printing plate of Example 4 was evaluated in the same manner as in Example 1. It was found that the straight line drawn had no distorted portion. The number of good prints was 80,000, indicating that the planographic printing plate has good printing durability.

### [Comparative Example 3]

A photo-polymerizable ink composition 7 was prepared and used to form an image and to prepare a planographic printing plate of Comparative Example 3 in the same manner as in Example 4, except that spectral sensitizer [KS-1] was replaced with benzophenone. The molar extinction coefficient at a wavelength of 405 nm of each of the photopolymerization initiators used in the ink composition 7 was less than 0 M⁻¹cm⁻¹.

Evaluation of the planographic printing plate of Comparative Example 3 was conducted in the same manner as in Example 1. As a result, it was found that the straight line had no distorted portion but the number of good prints was 100, indicating that the planographic printing plate has extremely poor printing durability.

### [Example 5]

### Photo-polymerizable ink composition 8

- CGI-784 (titanocene compound manufactured by Ciba-Geigy Corp., and serving as polymerization initiator) 10 g
- 9,10-Dibutoxyanthracene (spectral sensitizer) 8 g
- Lauryl acrylate (polymerizable compound) 20 g
- Dipropylene glycol diacrylate (polymerizable compound) 100 g
- Polyethylene glycol dimethacrylate (polymerizable compound) 20 g
- Ditrimethyrollpropane tetraacrylate (polymerizable compound) 30 g
- Dipentaerythritol hexaacrylate (polymerizable compound) 10 g
- Compound [DY-1] (dye having the aforementioned structure)(colorant) 2 g
- Tris(N-nitroso-N-phenylhydroxyaluminato)aluminum (polymerization inhibitor) 0.01 g
- Copolymer of tridecafluorooctyl acrylate and polypropylene glycol monoacrylate (surfactant) 0.2 g

The molar extinction coefficient at a wavelength of 405 nm of the spectral sensitizer used in the photo-polymerizable ink composition 8, as calculated form the absorbance in methanol, was 7,900 M⁻¹cm⁻¹.

The planographic printing plate of Example 5 was evaluated in the same manner as in Example 1. It was found that the straight line drawn had no distorted portion. The number of good prints was 60,000, indicating that the planographic printing plate has good printing durability.

### [Example 6]

A photo-polymerizable ink composition 9 was prepared and used to form an image and to prepare a planographic printing plate of Example 6 in the same manner as in Example 5, except that the spectral sensitizer, or 9,10-dibutoxyanthracene was replaced with compound [ZK-1] used in Example 2.

The planographic printing plate of Example 6 was evaluated in the same manner as in Example 1. It was found that the straight line drawn had no distorted portion. The number of good prints was 80,000, indicating that the planographic printing plate has good printing durability.

### [Comparative Example 4]

A photo-polymerizable ink composition 10 was prepared and used to form an image and to prepare a planographic printing plate of Comparative Example 4 in the same manner as in Example 6, except that the spectral sensitizer was not used. The molar extinction coefficient at a wavelength of 405 nm of the photopolymerization initiator used in the ink composition 10 was smaller than 1,000 M⁻¹cm⁻¹.

Evaluation of the planographic printing plate of Comparative Example 4 was conducted in the same manner as in Example 1. As a result, it was found that the straight line had no distorted portion but the number of good prints was 5,000, indicating that the planographic printing plate has poor printing durability.

### [Comparative Example 5]

An image was formed to prepare a planographic printing plate of Comparative Example 5 in the same manner as in Comparative Example 4, except that the high-pressure mercury lamp having power of 3,000 W was used to irradiate and cure the ink composition.

Image quality evaluation of the planographic printing plate of Comparative Example 5 was conducted in the same manner as in Example 1. As a result, the straight line had distorted portions and high-quality image could not be obtained. Therefore, printing durability test was not conducted.

### [Example 7]

### <Preparation of planographic printing plate precursor having ink-receiving layer on PET support>

The following composition 1 was stirred together with glass beads in a paint shaker (manufactured by Toyoseiki Co., Ltd.) at room temperature for 20 minutes. Thereafter, 33 g of the following composition 2 was added thereto. The resultant mixture was stirred with the paint shaker (manufactured by Toyoseiki Co., Ltd.) at room temperature for 2 minutes. The glass beads were then separated by filtration of the mixture to give a coating solution for forming an ink-receiving layer containing a dispersed porous filler.

### Composition 1

- Porous filler, or alumina RK30 (manufactured by Iwatani Chemical Industry Co., Ltd., and having an average diameter of 0.6 µm, an average micropore diameter of 50A, and an average specific surface area of 300 m²/g) 31 g
- Hydrophilic polymer
   (trialkoxysilyl group-modified polyvinyl alcohol R-1130 manufactured by Kuraray Co., Ltd., and having a modification content of 0.3 mol %) 70 g
- Aqueous 20% colloidal silica solution, or SNOWTEX C (manufactured by Nissan Chemical Industries Co., Ltd.) 60 g

### Composition 2

- Tetraethoxysilane 92 g
- Ethanol 163 g
- Water 163 g
- Nitric acid 0.1 g

The ink-receiving layer-coating solution was coated on a commercially available corona-treated polyethylene terephthalate (PET) film (i.e., LUMIRROR manufactured by Toray Industries, Inc.) with a wire bar to obtain a dry coating amount of 5 g/m², and the resulting coating was dried in an oven at 100°C for 10 minutes. Thus, a planographic printing plate precursor B having an ink-receiving layer was obtained.

A planographic printing plate of Example 7 was prepared in the same manner as in Example 6, except that the planographic printing plate precursor A was replaced with the planographic printing plate precursor B.

The planographic printing plate of Example 7 was evaluated in the same manner as in Example 1. The straight line drawn had no distorted portion. The number of good prints was 40,000. These shows that the method of forming a planographic printing plate according to the invention provides a planographic printing plate that has excellent printing durability and which can provide images with high image quality even when a PET film is used as the support of the printing plate.

## Claims

1. A method of producing a planographic printing plate, comprising ejecting a photo-polymerizable ink composition containing a polymerization-initiating substance having a molar extinction coefficient of 1,000 M⁻¹cm⁻¹ or more in a wavelength range of 400 nm to 700 nm on a support, and polymerizing and hardening ink deposited on the support by irradiation of the ink with light from a light source having an output of 1,000 W or less.

2. The method of Claim 1, wherein the molar extinction coefficient of the polymerization-initiating substance in a wavelength range of 400 nm to 450 nm is 3,000 M⁻¹cm⁻¹ or more.

3. The method of Claim 1, wherein the molar extinction coefficient of the polymerization-initiating substance in a wavelength range of 400 nm to 450 nm is 5,000 M⁻¹cm⁻¹ or more.

4. The method of Claim 1, wherein the molar extinction coefficient of the polymerization-initiating substance at a wavelength of 405 nm is 5,000 M⁻¹cm⁻¹ or more.

5. The method of Claim 1, wherein the polymerization-initiating substance comprises a 2,4,6-substituted-1,3,5-triazine compound represented by the following Formula (I): 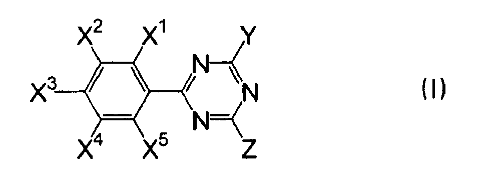 wherein Y and Z independently represent a substituted or unsubstituted alkyl group, a substituted or unsubstituted aryl group, or a substituted or unsubstituted aralkyl group; at least one of Y or Z is a mono-, di-, or tri-halogen-substituted methyl group that may be substituted; X¹ to X⁵ independently represent a hydrogen atom or a monovalent substituent; and not all of X¹ to X⁵ are hydrogen atoms.

6. The method of Claim 1, wherein the polymerization-initiating substance comprises a diazonium salt represented by the following Formula (II):
Ar²¹-N⁺≡N Z²¹⁻ (II)
wherein Ar²¹ represents an aryl group that has 20 or fewer carbon atoms and that may have at least one substituent; and Z²¹⁻ represents a counter ion selected from the group consisting of halide, perchlorate, tetrafluoroborate, hexafluorophosphate, and sulfonate ions.

7. The method of Claim 1, wherein the polymerization-initiating substance comprises a compound represented by the following Formula (III): 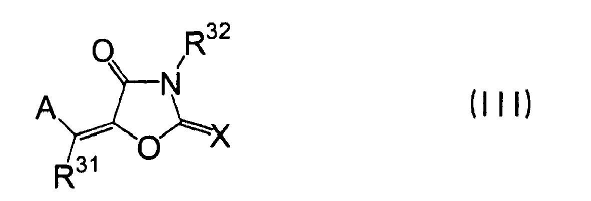 wherein A represents an aromatic or heterocyclic ring; X represents an oxygen atom, a sulfur atom or -N(R³³)-; R³¹ to R³³ independently represent a hydrogen atom or a monovalent substituent consisting of a non-metal atom or atoms; and A and R³¹, and/or R³² and R³³ may be bonded to each other to form an aliphatic or aromatic ring.

8. The method of Claim 1, wherein the polymerization-initiating substance comprises a compound represented by the following Formula (IV): 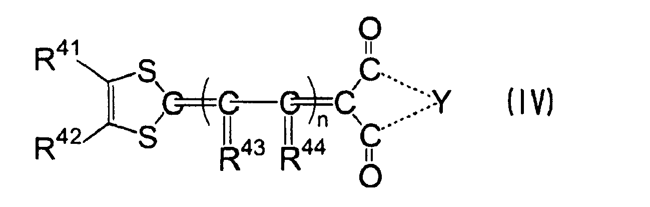 wherein R⁴¹ and R⁴² independently represent a hydrogen atom, a halogen atom, an alkyl group, an aryl group, a heterocyclic group, or a carboxy group; R⁴¹ and R⁴² may be bonded to each other to form a ring; R⁴³ and R⁴⁴ independently represent a hydrogen atom, a halogen atom, an alkyl group or an aryl group; Y represents a non-metal atomic group necessary to form a ring; at least one of R⁴¹, R⁴² or Y has one or more groups selected from -COOH, -COOR⁴⁵, -NHSO₂R⁴⁵, -CONHCOR⁴⁵, or -CONHSO₂R⁴⁵ as at least one substituent; R⁴⁵ represents an alkyl group, an aromatic group, or an aromatic alkyl group; and n is an integer of from 0 to 4.

9. A planographic printing plate, comprising an image prepared by ejecting a photo-polymerizable ink composition containing a polymerization-initiating substance having a molar extinction coefficient of 1,000 M⁻¹cm⁻¹ or more in a wavelength range of 400 nm to 700 nm on a support, and polymerizing and hardening the ink composition deposited on the support by irradiation of the ink composition with light from a light source having an output of 1,000 W or less.

10. The planographic printing plate of Claim 9, wherein the molar extinction coefficient of the polymerization-initiating substance in a wavelength range of 400 nm to 450 nm is 3,000 M⁻¹cm⁻¹ or more.

11. The planographic printing plate of Claim 9, wherein the molar extinction coefficient of the polymerization-initiating substance in a wavelength range of 400 nm to 450 nm is 5,000 M⁻¹cm⁻¹ or more.

12. The planographic printing plate of Claim 9, wherein the molar extinction coefficient of the polymerization-initiating substance at a wavelength of 405 nm is 5,000 M⁻¹cm⁻¹ or more.

13. The planographic printing plate of Claim 9, wherein the polymerization-initiating substance comprises a 2,4,6-substituted-1,3,5-triazine compound represented by the following Formula (I): 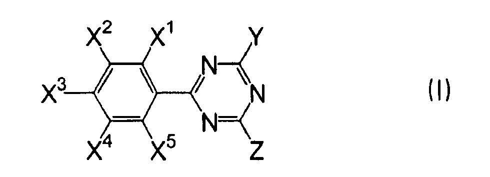 wherein Y and Z independently represent a substituted or unsubstituted alkyl group, a substituted or unsubstituted aryl group, or a substituted or unsubstituted aralkyl group; at least one of Y or Z is a mono-, di-, or tri-halogen-substituted methyl group that may be substituted; X¹ to X⁵ independently represent a hydrogen atom or a monovalent substituent; and not all of X¹ to X⁵ are hydrogen atoms.

14. The planographic printing plate of Claim 9, wherein the polymerization-initiating substance comprises a diazonium salt represented by the following Formula (II):
Ar²¹-N⁺≡N Z²¹⁻ (II)
wherein Ar²¹ represents an aryl group that has 20 or fewer carbon atoms and that may have at least one substituent; and Z²¹⁻ represents a counter ion selected from the group consisting of halide, perchlorate, tetrafluoroborate, hexafluorophosphate, and sulfonate ions.

15. The planographic printing plate of Claim 9, wherein the polymerization-initiating substance comprises a compound represented by the following Formula (III): 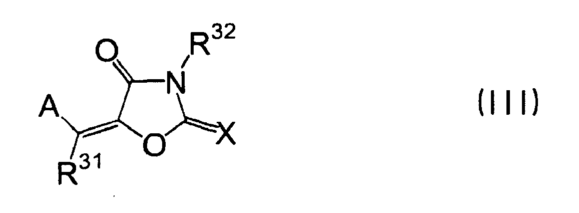 wherein A represents an aromatic or heterocyclic ring; X represents an oxygen atom, a sulfur atom or -N(R³³)-; R³¹ to R³³ independently represent a hydrogen atom or a monovalent substituent consisting of a non-metal atom or atoms; and A and R³¹, and/or R³² and R³³ may be bonded to each other to form an aliphatic or aromatic ring.

16. The planographic printing plate of Claim 9, wherein the polymerization-initiating substance comprises a compound represented by the following Formula (IV): 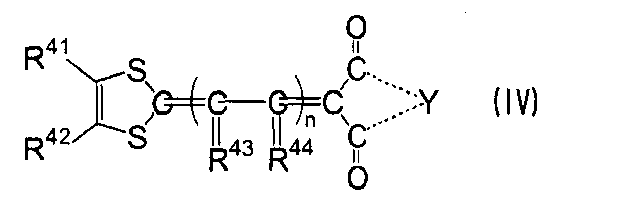 wherein R⁴¹ and R⁴² independently represent a hydrogen atom, a halogen atom, an alkyl group, an aryl group, a heterocyclic group, or a carboxy group; R⁴¹ and R⁴² may be bonded to each other to form a ring; R⁴³ and R⁴⁴ independently represent a hydrogen atom, a halogen atom, an alkyl group or an aryl group; Y represents a non-metal atomic group necessary to form a ring; at least one of R⁴¹, R⁴² or Y has one or more groups selected from -COOH, -COOR⁴⁵, -NHSO₂R⁴⁵, -CONHCOR⁴⁵, or -CONHSO₂R⁴⁵ as at least one substituent; R⁴⁵ represents an alkyl group, an aromatic group, or an aromatic alkyl group; and n is an integer of from 0 to 4.
